# EUROPÄISCHE PATENTSCHRIFT

(11) **EP 3 941 808 B1**
(45) Veröffentlichungstag und Bekanntmachung des Hinweises auf die Patenterteilung: **04.12.2024**
(21) Anmeldenummer: 20714953.5
(22) Anmeldetag: 19.03.2020
(51) Int. Cl.: B62D 63/02

(54) **ANTRIEBSVORRICHTUNG FÜR EIN VERKEHRSMITTELWECHSELSYSTEM, VERWENDUNG UND VERKEHRSMITTELWECHSELSYSTEM**
DRIVE DEVICE FOR A SYSTEM FOR CHANGING MEANS OF TRANSPORTATION, USE AND SYSTEM FOR CHANGING MEANS OF TRANSPORTATION
DISPOSITIF D'ENTRAÎNEMENT POUR SYSTÈME DE CHANGEMENT DE MOYEN DE TRANSPORT, UTILISATION ET SYSTÈME DE CHANGEMENT DE MOYEN DE TRANSPORT

(30) Priorität: 20.03.2019 DE 102019203797
(43) Veröffentlichungstag der Anmeldung: 26.01.2022
(73) Patentinhaber: EDAG Engineering GmbH, 65205 Wiesbaden (DE)
(72) Erfinder: BARCKMANN, Johannes, 36041 Fulda (DE); HASENAUER, Thomas, 36037 Fulda (DE)
(74) Vertreter: Isarpatent
(86) Internationale Anmeldenummer: PCT/EP2020/057709
(87) Internationale Veröffentlichungsnummer: WO 2020/188067

(56) Entgegenhaltungen:
- EP-A1- 2 363 338
- EP-A1- 3 315 390
- CH-A2- 699 320
- US-A- 4 645 023
- US-A- 5 490 755

## Beschreibung

### GEBIET DER ERFINDUNG

Die vorliegende Erfindung betrifft eine Antriebsvorrichtung für ein Verkehrsmittelwechselsystem, eine Verwendung einer derartigen Antriebsvorrichtung zur autonomen mobilen Verrichtung von Arbeitstätigkeiten, insbesondere verkehrsunabhängigen, Grünpflege-, Aufräum-, Instandhaltungs- und/oder Überwachungsarbeiten, sowie ein Verkehrsmittelwechselsystem mit einer Vielzahl derartiger Antriebsvorrichtungen.

### TECHNISCHER HINTERGRUND

Obwohl die vorliegende Erfindung sowie die ihr zugrunde liegende Ideen nachfolgend anhand von Personenbeförderungssystemen näher erläutert wird, ist sie darauf nicht beschränkt, sondern auf unterschiedlichste Beförderungssysteme, beispielsweise auch Frachtbeförderungssysteme, anwendbar.

US 5 490 755 A beschreibt einen selbstfahrenden Ladeträger mit einem Anhänger und einem selbstfahrenden Fahrzeug. Hierbei ist der Anhänger über eine Königszapfenanordnung an einer Deichsel mit dem ziehenden Fahrzeug verbunden.

EP 2 363 338 A1 beschreibt ein Arbeit- und Industriefahrzeug, bei welchem eine Motoreinheit über ein lösbares Gelenk mit verschiedenen Betriebsmodulen mechanisch verbunden werden kann.

CH 699 320 A2 beschreibt ein modulares Mehrzweckfahrzeug. Dabei können unterschiedliche Zusatzmodule an ein Fahrzeugmodul gekoppelt werden.

US 4 645 023 A beschreibt ein Geländefahrzeug mit einer gelenkigen Fahrzeugkombination aus 2zwei Fahrzeugeinheiten.

EP 3 315 390 A1 beschreibt eine Anordnung zum Transportieren einer Großfräse, unter Verwendung einer Sattelzugmaschine und einem an diese Sattelzugmaschine ankoppelbaren Sattelauflieger.

Herkömmliche Verkehrsmittelwechselsysteme beruhen auf der grundsätzlichen Idee, Personen- oder Frachtbeförderungskabinen mit unterschiedlichen Transportmodulen zu befördern. Beispielsweise beschreibt die DE 10 2018 002 229 A1 ein Verkehrsmittelwechselsystem, bei dem eine Personenkabine einen Teil eines modularen Fahrzeuges darstellt und bedarfsgerecht mit einem Flugmodul oder einem Straßenfahrmodul oder einem anderen Transportmodul mechanisch koppelbar ist.

Derartige herkömmliche Straßenfahrmodule sind ausschließlich für die konkrete Funktion des Transportierens von Personenkabinen ausgelegt. Somit muss beispielsweise für Verkehrs-Stoßzeiten, in welchen ein hoher Bedarf an Transportdienstleistungen für Personenkabinen abgefragt wird, eine sehr hohe Anzahl von Straßenfahrmodulen vorgehalten werden, welche jedoch für einen Großteil der übrigen Zeit, insbesondere in Nebenzeiten, nur zum Teil benötigt werden.

### ZUSAMMENFASSUNG DER ERFINDUNG

Vor diesem Hintergrund liegt der vorliegenden Erfindung die Aufgabe zugrunde, eine verbesserte Antriebsvorrichtung für ein Verkehrsmittelwechselsystem bereitzustellen. Erfindungsgemäß wird diese Aufgabe durch eine Antriebsvorrichtung, eine Verwendung einer Antriebsvorrichtung und/oder durch ein Verkehrsmittelwechselsystem mit den in unabhängigen Patentansprüchen angegebenen Merkmalen gelöst.

Demgemäß ist vorgesehen:
- Eine Antriebsvorrichtung für ein Verkehrsmittelwechselsystem, mit: einem Antriebsstrang, der für den Straßeneinsatz ausgelegt ist; einer Schnittstelle, die zur Kopplung mit einer Personen- und/oder Frachtkabine und/oder sonstigen Anhängermodulen ausgelegt ist; und einer Arbeitseinrichtung, die zur Verrichtung von, insbesondere verkehrsunabhängigen, Pflege-, Aufräum-, Instandhaltungs- und/oder Überwachungsarbeiten ausgelegt ist, wobei die Antriebsvorrichtung einen ersten Betriebszustand aufweist, in dem sie mit einer Personen- und/oder Frachtkabine gekoppelt und zur autonomen Personen- und/oder Frachtbeförderung konfiguriert ist, und wobei die Antriebsvorrichtung einen zweiten Betriebszustand aufweist, in dem sie von einer Personen- und/oder Frachtkabine entkoppelt und zur autonomen mobilen Verrichtung von, insbesondere verkehrsunabhängigen, Grünpflege-, Aufräum-, Instandhaltungs- und/oder Überwachungsarbeiten konfiguriert ist.
- Eine Verwendung einer autonomen Antriebsvorrichtung eines Verkehrsmittelwechselsystems zur autonomen mobilen Verrichtung von, insbesondere verkehrsunabhängigen, Grünpflege-, Aufräum-, Instandhaltungs- und/oder Überwachungsarbeiten.
- Ein Verkehrsmittelwechselsystem mit einer Vielzahl von Antriebsvorrichtungen, die jeweils zur autonomen Personen- und/oder Frachtbeförderung oder zur autonomen Arbeitsverrichtung konfigurierbar sind, wobei eine zentrale Steuerung des Verkehrsmittelwechselsystems die in einem Gebiet verteilten Antriebsvorrichtungen in Abhängigkeit eines in dem Gebiet bestehenden Beförderungsbedarfs und bestehenden Arbeitsbedarfs dynamisch konfiguriert.

Die von der Steuerung verwendete Software zur Steuerung der Antriebsvorrichtungen in Abhängigkeit des Beförderungs- und/oder Arbeitsbedarfs ist skalierbar, d.h., sie ist für alle geografischen Einsatzbereiche bzw. Gebiete gleich.

Bei einer möglichen Ausführungsform weist das Verkehrsmittelwechselsystem ein IoT-Bezahlsystem auf, welches Beförderungsleistungen oder Arbeitsleistungen gegenüber Nutzern abrechne**t**, insbesondere mittels Kryptowährungen.

Eine der vorliegenden Erfindung zugrunde liegende Erkenntnis besteht darin, dass bei Verkehrsmittelwechselsystemen Verkehrs-Stoßzeiten existieren, zu welchen eine erhöhte Anzahl an Antriebsvorrichtungen zum Transport von Personen und/oder Gütern benötigt wird, die jedoch ansonsten außerhalb der Verkehrs-Stoßzeiten zu einem überwiegenden Teil ihrer Einsatzzeiten ungenutzt in Bereitschaft vorgehalten werden müssen.

Eine der vorliegenden Erfindung zugrunde liegende Idee besteht darin, diese Vorhaltezeiträume bzw. Bereitschaftszeiträume zu nutzen und die Antriebsvorrichtungen eines Verkehrsmittelwechselsystems derart auszulegen, dass sie außerhalb von Verkehrs-Stoßzeiten, d. h. in Zeiträumen, in denen sie nicht für die Personen- und oder Güterbeförderung benötigt werden, für die Verrichtung von Plege-, Aufräum- und/oder Instandhaltungsarbeiten oder auch für Überwachungsarbeiten einsetzbar sind.

Auf diese Weise kann die Effizienz eines multimodalen Wechselsystems für Verkehrsmittel erhöht werden, da jede Antriebsvorrichtung nunmehr in Nebenzeiten bzw. Bereitschaftszeiträumen autark eigenständige Tätigkeiten erfüllen kann, insbesondere als autonomer mobiler Arbeitsroboter.

Erfindungsgemäß ist die Antriebsvorrichtung derart ausgelegt, dass sie auch selbstständig und frei andere Funktionen bzw. Tätigkeiten als die primären Beförderungstätigkeiten autonom erfüllen kann. Derartige andere Funktionen können im urbanen Umfeld zum Beispiel die Straßenreinigung, Überwachungstätigkeiten, Grünstreifen-Schnitt, Reparaturen, Müllentleerung oder -Beseitigung oder dergleichen sein. Die Antriebsvorrichtung wird hierzu mit einer für derartige Tätigkeiten geeigneten Sensorik und geeigneten Werkzeugen, beispielsweise Roboterarmen, ausgerüstet. Im Bedarfsfall kann sich die Antriebsvorrichtung ferner an ihrer mechanischen Schnittstelle, welche in dem zweiten Betriebszustand aufgrund der Entkopplung von der Personen- oder Frachtkabine frei wird, auch mit einem für den jeweiligen Arbeitsvorgang geeigneten Werkzeugmodul bzw. Arbeitsmodul koppeln. Insbesondere ist die Antriebsvorrichtung derart ausgestaltet, dass sie sich komplett selbstständig in Bedarfsfall mit einem Werkzeugmodul koppeln und auch wieder, falls sie zur Personen-und/oder Frachtbeförderung benötigt wird, entkoppelt. Die Antriebsvorrichtung ist somit dazu ausgelegt, selbsttätig bedarfsgerecht zwischen dem ersten Betriebszustand und dem zweiten Betriebszustand zu wechseln.

Im Unterschied zu existierenden Konzepten lässt sich die erfindungsgemäße Antriebsvorrichtung somit für unterschiedlichste Anwendungen einsetzen und mit verschiedenartigen Personen und/oder Frachtkabinen koppeln sowie mit verschiedenartigen Werkzeugmodulen koppeln und somit stets bedarfsgerecht für unterschiedliche Zwecke bzw. Tätigkeiten einsetzen.

Ein Bedarfsmanagement erfolgt vorzugsweise über ein Cloud gesteuertes Smart City System, welches einen zentralen Dienst zur Tätigkeitsverteilung bereitstellt. Die auszuführenden Tätigkeiten werden von einer Arbeitseinrichtung vorzugsweise vollautonom, insbesondere mittels künstlicher Intelligenz gesteuert, durchgeführt. Eine in der Antriebsvorrichtung integrierte Steuerung weist bei einer möglichen Ausführungsform ein künstliches Intelligenzmodul KIM zur autonomen Steuerung von Arbeitstätigkeiten auf, die durch die Arbeitseinrichtung verrichtet werden. Das künstliche Intelligenzmodul KIM kann hierzu Umgebungsdaten, insbesondere Kamerabilder, die von einer Sensorik generiert werden, auswerten.

In dem ersten Betriebszustand kann sich die Antriebsvorrichtung mit einer reinen Frachtkabine, einer reinen Personenkabine oder mit einer kombinierten Personen- und Frachtkabine koppeln.

Die Frachtkabinen weisen beispielsweise Kabinen zur sogenannten Last Mile Anlieferung auf. Des Weiteren können die Frachtkabinen beispielsweise für die Essens- oder Einkaufsauslieferung oder zum Verkauf bzw. Verteilung von Gütern ausgelegt sein. Ferner können Frachtkabinen in Form von Normcontainern auf Tieflade-Anhängern oder dergleichen vorgesehen sein.

Die Personenkabinen können ebenfalls unterschiedliche Personenkabinengattungen aufweisen, die von Ultra-Kurzstreckenmodulen mit Stehplätzen über Kleinbusmodule mit beispielsweise bis zu fünfzehn Personen Sitzplätzen, Taximodulen mit zwei bis sechs Sitzplätzen für kürzere Strecken bis hin zu Luxusreisemodulen mit Großraumkabinen für Kurzstrecken oder Langstrecken mit z.B. zwei bis sechs Sitzplätzen reichen. Denkbar sind ferner spezielle Kabinen für unterschiedlichste Bedarfsanwendungen, beispielsweise Kabinen für die Freizeitgestaltung wie Wellness, Party oder Videospiel oder auch beispielsweise für Tiertransport.

Kombinierte Personen und Frachtkabinen kommen beispielsweise für Handwerksbetriebe, die gleichermaßen Personen und Material zu Ihren Kunden befördern wollen, in Frage.

In dem zweiten Betriebsmodus, in welchem die Arbeitseinrichtung der Antriebsvorrichtung aktiv ist und die elektromechanische Schnittstelle der Antriebsvorrichtung von einer Personen- und/oder Frachtkabine entkoppelt ist, kann die Schnittstelle auch zur Aufnahme oder Ankopplung eines Werkzeugmoduls genutzt werden, welches die Antriebsvorrichtung bei der jeweils geplanten Tätigkeit unterstützt bzw. speziell dafür konfiguriert ist.

Erfindungsgemäß kommt eine besondere Bedeutung der Sensorik der Antriebsvorrichtung zu, welche ein vollkommen autonomes Arbeiten der Antriebsvorrichtung ermöglicht und sich insbesondere hinsichtlich ihrer Auslegung von der Sensorik einer rein zur Beförderung ausgelegten Antriebsvorrichtung unterscheidet. Dementsprechend ist die Sensorik nicht nur für das autonome Fahren im Straßenbetrieb sondern auch für das vollautonome Durchführen von Arbeiten aller Art angeordnet und ausgelegt. Ergänzend kann die Sensorik auch für die Kommunikation mit natürlichen Personen eingesetzt werden.

Für eine Kopplung der Antriebsvorrichtung mit einer Personen-oder Frachtkabine bzw. mit einem Werkzeugmodul kann eine geeignete mechanische Verbindungseinrichtung, beispielsweise eine Fanghakenverbindung, eine lösbare Rastverbindung, eine Magnetkupplung oder dergleichen vorgesehen sein. Die Antriebsvorrichtung kann sich dazu gegebenenfalls, insbesondere zum Einhängen eines Fanghakens während des Ankoppelvorganges neigen. Alternativ kann auch die Schnittstelle der Antriebsvorrichtung relativ zu einem Unterbau der Antriebsvorrichtung beweglich ausgebildet sein. Beispielsweise kann ein Fanghaken selbst beweglich ausgebildet sein und sich zum Einhängen und Aushängen neigen.

Parallel zu der mechanischen Kopplung ist vorzugsweise eine damit einhergehende elektrische Leistungs- und/oder Signalverbindung bzw. Kopplung über die Schnittstelle der Antriebsvorrichtung vorgesehen.

Die an die Antriebsvorrichtung angekoppelten Anhängermodule, d.h. Werkzeugmodule oder Personen- oder Frachtbeförderungsmodule, können mit eigenen Antriebsmotoren, insbesondere Elektromotoren, und Batterien ausgestattet sein.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform weist die Antriebsvorrichtung eine zentrale Sensoreinheit auf, welche in dem zweiten Betriebszustand einen höchsten Punkt der Antriebsvorrichtung bildet. Auf diese Weise ist die Sensoreinheit für den zweiten Betriebszustand, d.h. zum Verrichten von Pflege-, Aufräum-, Instandhaltungs- und/oder Überwachungsarbeiten, geeignet positioniert, d.h. sie ist für einen Rundum-Überblick nach oben erhaben angeordnet.

Gemäß einer Ausführungsform ist die Sensoreinheit positionsverlagerbar ausgebildet. In dem ersten Betriebszustand der Antriebsvorrichtung ist dessen Sensoreinheit in einer aerodynamisch günstigen Position in eine Fahrzeughülle der Antriebsvorrichtung und/oder der Personen- und/oder Frachtkabine einführbar bzw. integrierbar. Auf diese Weise wird für den Beförderungsbetrieb der Luftwiderstand verringert und somit die Effizienz bei der Beförderung verbessert. Dennoch kann die Sensorik der Sensoreinheit auch in dem ersten Betriebszustand für den autonomen Fahrbetrieb genutzt werden. In dem zweiten Betriebszustand ist die Sensorik nach oben verlagerbar, so dass die Sensoreinheit erhaben nach oben vorsteht und einen Kopf der Antriebsvorrichtung bildet. Auf diese Weise ist die Sensorik für die Verrichtung von Pflege-, Aufräum-, Instandhaltungs- und/oder Überwachungsarbeiten geeignet, da sie sich an einem höchsten Punkt, an der Antriebsvorrichtung befindet. Auf diese Weise ist die Antriebsvorrichtung vorteilhaft in der erfindungsgemäßen Weise für die unterschiedlichen Betriebszustände gleichermaßen ausgelegt und somit flexibel sowohl für autonome Beförderungsaufgaben als auch zur autonomen Verrichtung von Arbeiten einsetzbar. Darüber hinaus lässt sich die Antriebsvorrichtung für die Verrichtung der Arbeiten somit auch in ein Umfeld natürlicher Personen leichter integrieren, da die Sensoreinheit als Kopf einen Ansprechpunkt auf Augenhöhe einer natürlichen Person bildet, sodass eine intuitive Interaktion mit der Antriebsvorrichtung für natürliche Personen erleichtert wird.

Gemäß einer Ausführungsform weist die Arbeitseinrichtung einen Schwenkarm zur Verlagerung der Sensoreinheit auf, der über ein im Bereich einer Frontseite der Antriebsvorrichtung positioniertes Schwenklager mit einem auch den Antriebsstrang enthaltenden Unterbau gekoppelt ist. Auf diese Weise wird vorteilhaft eine besonders einfache und robuste Lösung zur Verstellung der Sensoreinheit bereitgestellt. In dem ersten Betriebszustand versenkt sich die Sensoreinheit vorzugsweise zumindest teilweise in einer Fahrzeughülle bzw. Karosserie, wozu vorzugsweise eine entsprechende Aussparung vorgesehen ist. Für den autonomen Fahrbetrieb ist die Positionierung der Sensorik dabei immer noch ausreichend hoch positioniert. Beispielsweise eignet sich diese Konfiguration neben dem Kurzstreckenbetrieb im innerstädtischen Bereich auch für den Langstreckenbetrieb oder höhere Geschwindigkeiten, da die teilweise in die Fahrzeughülle versenkte Sensoreinheit eine aerodynamisch vorteilhafte und somit energiesparende Beförderung ermöglicht. Sobald die Personen- und/oder Frachtkabine von der Antriebsvorrichtung entkoppelt wird, klappt die Sensoreinheit nach vorne bzw. oben hoch, und ist somit nach oben erhaben an der Frontseite der Antriebsvorrichtung stehend in der Art eines Kopfes angeordnet. Die Sensoreinheit ist entsprechend der erhöhten sensorischen Anforderungen für das autonome Durchführen bzw. Verrichten von Arbeiten und/oder zur Kommunikation mit umstehenden Personen in dieser erhöhten Stellung positioniert bzw. konfiguriert.

Gemäß einer weiteren Ausführungsform kann die Sensoreinheit positionsfest ausgebildet sein, wobei die Sensoreinheit an einer Frontseite der Antriebsvorrichtung einen Kopf bildet, der in dem zweiten Betriebszustand nach oben erhaben vorsteht. In dieser Ausführungsform ist die Sensoreinheit stets, d.h. auch im ersten Betriebszustand, in dieser erhabenen Position angeordnet. Beispielsweise kann dies zur Beförderung einer Personen- und/oder Frachtkabine im innerstädtischen Verkehr, wo aerodynamische Effizienz eines Fahrzeugs keine übergeordnete Rolle spielt, vorgesehen sein.

Gemäß einer Ausführungsform ist im Bereich der Sensoreinheit eine Mensch-Maschine-Schnittstelle vorgesehen, welche eine Anzeigeeinrichtung aufweist, die zur visuellen Kommunikation mit Personen ausgelegt ist. Die Anzeigeeinrichtung kann insbesondere dazu ausgelegt sein, um menschliche Mimik zu imitieren und somit natürlichen Personen, welchen die Antriebsvorrichtung insbesondere beim Durchführen von Arbeiten begegnet, zu interagieren. Beispielsweise kann die Anzeigeeinrichtung zumindest eine schematisierte Wiedergabe von menschlichen Augen aufweisen, wodurch bereits eine Vielzahl von mimischen Gesten darstellbar ist.

Gemäß einer Ausführungsform weist die Arbeitseinrichtung der Antriebsvorrichtung mechanische Arbeitswerkzeuge, insbesondere zumindest einen Greifarm, auf, welche zur Verrichtung von Pflege-, Aufräum- und/oder Instandhaltungsarbeiten ausgelegt sind. Dabei kann es sich insbesondere um universelle Arbeitswerkzeuge, die für unterschiedlichste Arbeiten einsetzbar sind, handeln.

Die Arbeitseinrichtung der Antriebsvorrichtung ist vorzugsweise ferner ausgebildet, sich für spezielle Tätigkeiten mit einem zusätzlichen Werkzeug- oder Arbeitsmodul, welches eine mechanischen Schnittstelle aufweist und über die Arbeitseinrichtung gesteuert werden kann, auszustatten. Dementsprechend ist gemäß einer Ausführungsform die elektromechanische Schnittstelle der Antriebsvorrichtung auch zur Kopplung mit einem Arbeitsgerät, insbesondere einem Werkzeugmodul, ausgelegt. Auf diese Weise ist die Antriebsvorrichtung im zweiten Betriebszustand über die Schnittstelle vorteilhaft bedarfsgerecht als spezialisierter autonomer Arbeitsroboter für unterschiedlichste Anwendungen konfigurierbar.

Gemäß einer Ausführungsform ist die Arbeitseinrichtung der Antriebsvorrichtung oder eines entkoppelbaren Werkzeugmoduls zur Straßenreinigung ausgelegt. Optional oder zusätzlich kann die Arbeitseinrichtung auch zur Straßeninstandhaltung ausgelegt sein. Insbesondere ist dazu ein Straßenreinigungs- und/oder Straßeninstandhaltungsmodul mit der mechanischen Schnittstelle der Antriebsvorrichtung koppelbar und über die Steuerung der Antriebsvorrichtung und/oder eine eigene lokale Steuerung steuerbar. Beispielsweise kann in dem Straßeninstandhaltungsmodul als Werkzeuge eine Straßenkehrbürste, einen Auffangbehälter für Kehricht, eine Absperrausrüstung für erkannte Straßenschäden oder dergleichen vorgesehen sein. Auch hier kann ein geeigneter Roboterarm für inspektions- oder Absperrarbeiten vorgesehen sein. Auf diese Weise ist die Antriebsvorrichtung vorteilhaft als autonomer Stra-ßenreinigungs- und/oder Straßeninstandhaltungsroboter konfigurierbar.

Gemäß einer Ausführungsform ist die Arbeitseinrichtung der Antriebsvorrichtung oder eines daran ankoppelbaren Werkzeugmoduls zur Müllsammlung ausgelegt. Alternativ oder zusätzlich kann die Arbeitseinrichtung zur Entleerung von öffentlichen Mülleimern ausgelegt sein. Beispielsweise ist für diese Tätigkeit ein Müllsammelmodul mit der mechanischen Schnittstelle der Antriebsvorrichtung koppelbar und über die Steuerung der Antriebsvorrichtung steuerbar. Beispielsweise kann die Arbeitseinrichtung mit einem Greifarm zum Ausleeren von Mülleimern und einem Container zur Aufnahme des Mülls ausgerüstet sein. Auf diese Weise ist die Antriebsvorrichtung vorteilhaft als autonomer Müllsammelroboter konfigurierbar.

Gemäß einer weiteren Ausführungsform ist die Arbeitseinrichtung der Antriebsvorrichtung oder eines daran ankoppelbaren Werkzeugmoduls zur Grünpflege ausgelegt. Beispielsweise ist ein Grünpflegemodul als Werkzeugmodul mit der mechanischen Schnittstelle der Antriebsvorrichtung koppelbar und über eine Steuerung der Antriebsvorrichtung steuerbar. Beispielswiese kann dieses einen zum Baumschnitt ausgelegten Roboterarm und einen Grünschnitt-Sammelcontainer aufweisen. Auf diese Weise ist die Antriebsvorrichtung vorteilhaft als autonomer Grünpflegeroboter konfigurierbar.

Gemäß einer weiteren Ausführungsform ist die Arbeitseinrichtung der Antriebsvorrichtung oder eines daran ankoppelbaren Werkzeugmoduls zur Sicherheitsüberwachung ausgelegt. Die Sensoreinheit der Antriebsvorrichtung kann zur Sicherheitsüberwachung speziell ausgelegte Sensoren auf. Beispielsweise können für Überwachungstätigkeiten ausgelegte Kamerasysteme und ein zur Identifikation von Gefahren ausgelegtes künstliches Intelligenz-Modul vorgesehen sein. Auf diese Weise kann die Antriebsvorrichtung oder ein daran angekoppeltes Überwachungsmodul in dem zweiten Betriebszustand direkt Sicherheitsüberwachungstätigkeiten übernehmen und ist somit als autonomer Überwachungsroboter einsetzbar. Beispielsweise können Antriebsvorrichtungen für die Gebäudeüberwachungen, Streifenfahrten oder dergleichen eingesetzt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung einer Antriebsvorrichtung in einem ersten Betriebszustand;
- Fig. 2: eine schematische Darstellung der Antriebsvorrichtung nach Fig. 1 in einem zweiten Betriebszustand;
- Fig. 3: eine schematische Darstellung einer Antriebsvorrichtung gemäß einer Ausführungsform in einem zweiten Betriebszustand;
- Fig. 4: eine Antriebsvorrichtung gekoppelt mit einem Werkzeugmodul gemäß einer Ausführungsform;
- Fig. 5: eine Antriebsvorrichtung gekoppelt mit einem Werkzeugmodul gemäß einer weiteren Ausführungsform;
- Fig. 6: eine Antriebsvorrichtung gekoppelt mit einem Werkzeugmodul gemäß einer noch weiteren Ausführungsform;
- Fig. 7: eine schematische Darstellung einer Antriebsvorrichtung gemäß einer weiteren Ausführungsform in einem zweiten Betriebszustand;
- Fig. 8: eine schematische Darstellung einer Antriebsvorrichtung gemäß einer weiteren Ausführungsform in einem ersten Betriebszustand;
- Fig. 9: die Antriebsvorrichtung nach Fig. 8 in einem zweiten Betriebszustand;
- Fig. 10: eine schematische Darstellung einer Antriebsvorrichtung gemäß einer weiteren Ausführungsform in einem zweiten Betriebszustand;
- Fig. 11: eine perspektivische Ansicht eines Transportfahrzeugs mit einer Antriebsvorrichtung und einer Kabine gemäß einer weiteren Ausführungsform in dem ersten Betriebszustand;
- Fig. 12: das Transportfahrzeug gemäß Fig. 11 während des Entkoppelvorganges zum Entkoppeln von Antriebsvorrichtung und Kabine;
- Fig. 13: die entkoppelte Kabine nach dem Entkoppelvorgang gemäß Fig. 12;
- Fig. 14: die entkoppelte Antriebsvorrichtung nach dem Entkoppelvorgang gemäß Fig. 12 in dem zweiten Betriebszustand;
- Fig. 15: die Kabine gemäß Fig. 13 beim Aufladen ihrer Batterie;
- Fig. 16: eine Seitenansicht eines Transportfahrzeugs mit einer Antriebsvorrichtung und einer angekoppelten Kabine gemäß einer weiteren Ausführungsform und
- Fig. 17: eine schematische Ansicht zur Erläuterung des erfindungsgemäßen Verkehrsmittelwechselsystems.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausgeführt ist - jeweils mit denselben Bezugszeichen versehen.

### BESCHREIBUNG VON AUSFÜHRUNGSBEISPIELEN

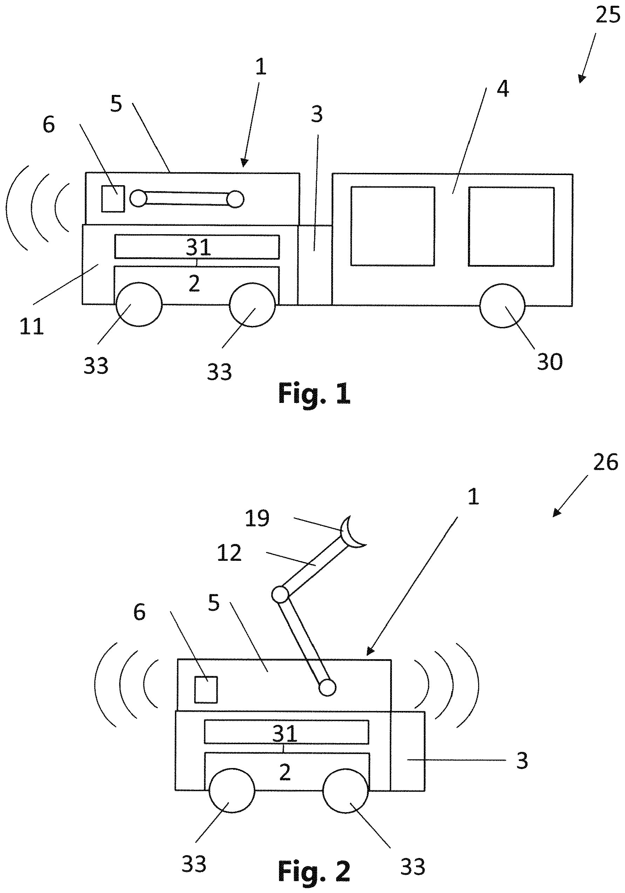

Fig. 1 zeigt eine schematische Darstellung einer autonomen Antriebsvorrichtung 1 in einem ersten Betriebszustand, d.h. mit einer angekoppelten Personen- oder Frachtkabine 4.

Die autonome Antriebsvorrichtung 1 ist vorzugsweise als selbsttätig fahrendes System ausgebildet, das über eine zum autonomen Fahren geeignete Sensorausstattung bzw. Sensorik und insbesondere über eine für den autonomen Fahrbetrieb ausgelegte künstliche Intelligenz verfügt. Ferner verfügt die autonome Antriebsvorrichtung 1 vorzugsweise über Transceiver, insbesondere über Car to Car und Car to X Kommunikationseinrichtungen sowie eine für die Koordination autonomer Systeme geeignete Cloud Anbindung.

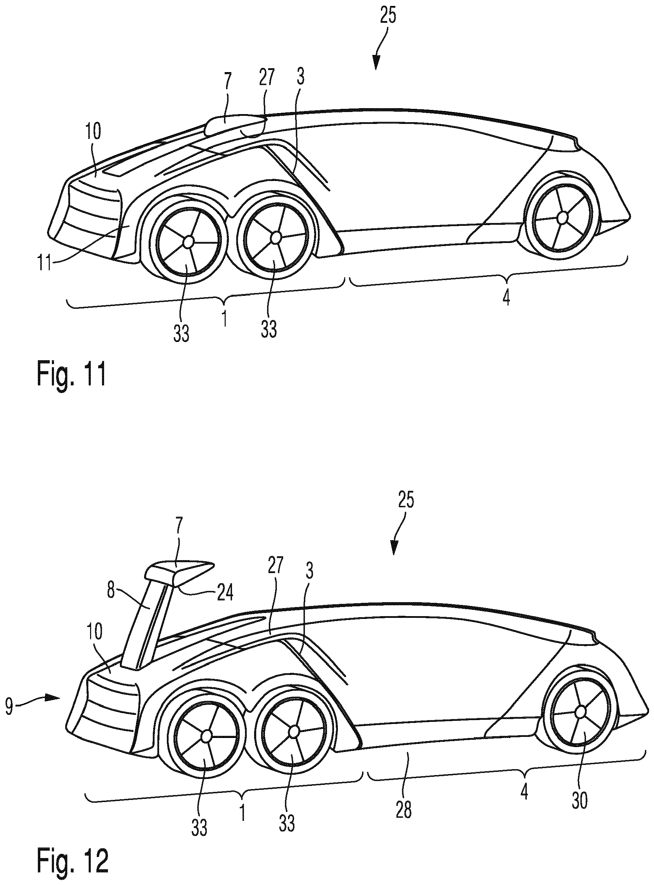

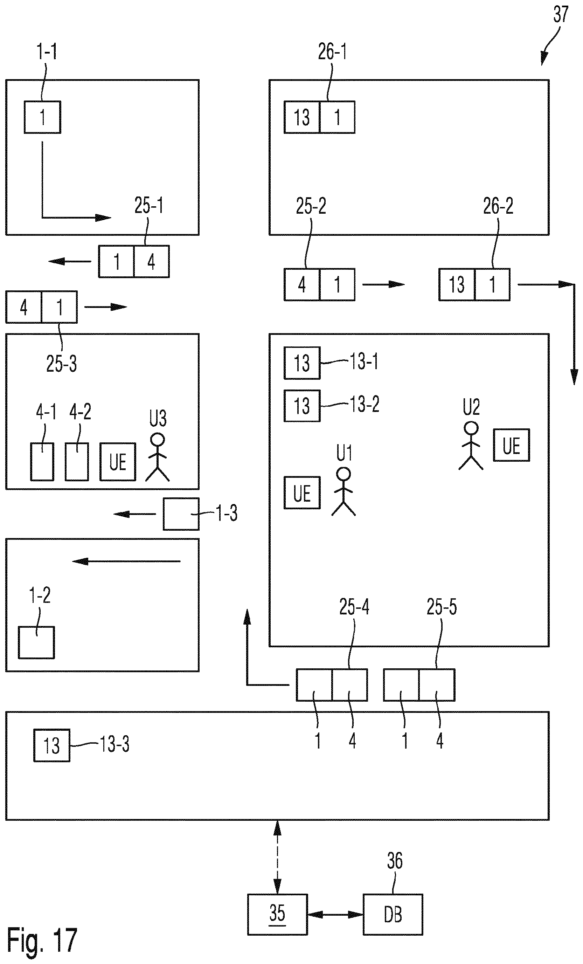

Die Antriebsvorrichtung 1 ist als modulare Antriebseinheit eines Verkehrsmittelwechselsystems 37 ausgebildet. Fig. 17 zeigt schematisch ein Beispiel für ein derartiges Verkehrsmittelwechselsystem 37. Dementsprechend weist sie eine mechanische und/oder elektromechanische Schnittstelle 3 auf, die zur Kopplung mit mindestens einer Personen- und/oder Frachtkabine 4 ausgelegt ist. Die Antriebsvorrichtung 1 zusammen mit der Personen- und/oder Frachtkabine 4 bilden zusammen ein Transportfahrzeug 25, wie es in den Figuren 1, 11 dargestellt ist. Mehrere Antriebsvorrichtungen 1 können bei einer möglichen Ausführungsform über Schnittstellen zur Steigerung der Zugkraft gekoppelt werden.

Sowohl die Antriebsvorrichtung 1 als auch die Kabine 4 sind in Fig. 1 lediglich als Kästen symbolisiert dargestellt. Die reale Antriebsvorrichtung 1 und die reale Kabine 4 ist vorzugsweise nicht rechteckig geformt, sondern entsprechend üblicher im Straßenverkehr erforderlicher Sicherheitsbestimmungen, üblicher Anforderungen an aerodynamische Effizienz und auch unter Designaspekten geformt, wie in Fig. 11 dargestellt.

Bei der in Fig. 1 schematisch dargestellten Ausführungsform ist die Antriebsvorrichtung 1 über die Schnittstelle 3 mit einer Personenkabine 4 mit schematisiert dargestellten Fenstern gekoppelt. Die Schnittstelle 3 ist in Fig. 1 ebenfalls lediglich schematisch mit einem Kasten symbolisiert dargestellt. Es sind unterschiedliche Realisierungen mechanischer Schnittstellenarten möglich. Erfindungsgemäss handelt es sich um eine Schnittstelle 3 zur steifen Kopplung. Vorzugsweise ist in die Schnittstelle 3 auch eine elektrische Schnittstelle integriert, welche zur Leistung-und/oder Signalübertragung ausgebildet ist. Mechanische Koppeleinrichtungen, beispielsweise mittels Fanghaken, sind einem Fachmann aus dem Stand der Technik bekannt und werden an dieser Stelle nicht gesondert beschrieben.

Der Bereich der Schnittstelle 3 kann sowohl die Antriebsvorrichtung 1 als auch die Kabine 4 in vielfältiger Weise gestaltet sein. Vorzugsweise handelt es sich um einander ergänzende komplementäre Gehäuseformen, sodass die Antriebseinrichtung 2 und die Kabine 4 zusammen ein Fahrzeug mit einheitlicher äußerer Erscheinung bilden. Beispielsweise können die Kontaktflächen der Kabine 4 und der Antriebsvorrichtung 1 im Bereich der Schnittstelle 3 schräg ausgebildet sein, um ein Koppeln zu erleichtern, wie in Fig. 11 erkennbar.

Die Antriebsvorrichtung 1 weist einen Antriebsstrang 2 auf, der für den autonomen Straßeneinsatz ausgelegt ist. Insbesondere kann es sich um einen elektrischen Antriebsstrang 2 handeln, der mit sämtlichen Komponenten, beispielsweise einer Batterie, einer Leistungselektronik und einem Elektromotor, in einen Unterbau 11 der Antriebsvorrichtung 1 integriert ist. Der Antriebsstrang 2 kann auch eine automatische Lenkung bzw. Steuerung aufweisen.

Der Antriebsstrang 2 kann unter anderem ein für den Straßeneinsatz geeignetes und Straßenunebenheiten kompensierendes Fahrwerk, sowie straßentaugliche Räder 33 aufweisen. Ferner zeichnet sich der Antriebsstrang 2 vorzugsweise durch eine für den Straßenverkehr ausreichende Antriebs- und Bremsleistung sowie Wetterbeständigkeit aus.

Die Antriebsvorrichtung 1 weist darüber hinaus eine Arbeitseinrichtung 5 auf, welche in Fig. 1 ebenfalls lediglich schematisiert dargestellt ist. Die Arbeitseinrichtung 5 ist zur Verrichtung von verkehrsunabhängigen Pflege-, Aufräum-, Instandhaltungs- und/oder Überwachungsarbeiten ausgelegt. Die Antriebsvorrichtung 1 weist dazu eine für derartige Arbeiten bzw. Tätigkeiten ausgelegte Sensoreinheit 6 auf. Eine derartige Sensoreinheit 6 kann beispielsweise Kamera-, Radar-, Lidar-, Wärme-, Luftdruck-, Feuchtigkeits-, Beschleunigungs-, Kraftmess-Sensorsysteme oder dergleichen enthalten. Die Sensoreinheit 6 kann in der Arbeitseinrichtung 5 der Antriebsvorrichtung 1 integriert sein.

Optional kann, wie in der dargestellten Ausführungsform gemäß Fig. 2 schematisch angedeutet, auch ein universelles mechanisches Arbeitswerkzeug als Teil der Arbeitseinrichtung 5 vorgesehen sein, beispielsweise ein universeller Greifarm 12, der zur Verrichtung von Pflege-, Aufräum- und/oder Instandhaltungsarbeiten ausgelegt ist. Beispielsweise kann es sich um einen mehrachsigen Roboterarm 12 mit einem Greifaktuator 19 handeln.

Die Antriebsvorrichtung 1 weist vorzugsweise eine Steuereinrichtung 31 auf, welche zur autonomen Steuerung der im zweiten Betriebszustand ausgeführten Tätigkeiten ausgelegt ist. Die Steuereinrichtung 31 erhält Sensordaten und Sensorsignale von Sensoren der Sensoreinheit 6.

Weiter können Softwaremodule der Steuereinrichtung 31 vorgesehen sein, welche den autonomen Betrieb von entsprechenden an die mechanische Schnittstelle 3 ankoppelbaren Werkzeugmodulen 13 und/oder von Werkzeugen der Arbeitseinrichtung 5 steuern.

In dem in Fig. 1 und Fig. 11 dargestellten ersten Betriebszustand ist die Antriebsvorrichtung 1 mit der Personen- und/oder Frachtkabine 4 gekoppelt. Die Systeme der Arbeitseinrichtung 5 sind dabei zur autonomen Personen- und/oder Frachtbeförderung konfiguriert. Insbesondere sind sämtliche Werkzeuge, Anschlüsse für Arbeitswerkzeuge oder dergleichen in diesem ersten Betriebszustand in einer für den Straßenbetrieb zulässigen Weise inaktiv und/oder verstaut. Insbesondere ist ferner die Sensorik der Antriebsvorrichtung 1 für den autonomen Straßenbeförderungsbetrieb konfiguriert. In der dargestellten Ausführungsform ist dies durch eine nach vorne gerichtete angedeutete sensorische Abtastung durch die Sensoreinrichtung 6 symbolisiert.

Bei der hier lediglich schematisiert dargestellten Personen- und/oder Frachtkabine 4 kann es sich um unterschiedlich ausgelegte Kabinen handeln. Als Frachtkabinen 4 kommen beispielsweise Kabinen zur sogenannten Last Mile Anlieferung infrage. Des Weiteren sind beispielsweise Frachtkabinen 4 für die Essens- oder Einkaufsauslieferung oder für die Verteilung von sonstigen Waren vorgesehen. Ferner können klassische Frachtkabinen, beispielsweise in Form von Normcontainern auf Tieflader Anhängern oder dergleichen vorgesehen werden. Frachtkabinen 4 können derart ausgebildet sein, dass sie kleinere Frachtkabinen 4 oder Personenkabinen 4 und auch inaktive Antriebsvorrichtungen 1 aufnehmen können.

Als Personenkabinen 4 kommen unterschiedlichste Kabinengattungen infrage, von Kurzstreckenmodule mit Stehplätzen, über Kleinbusmodule mit beispielsweise bis zu fünfzehn Personen Sitzplätzen, Taximodulen mit z.B. zwei bis sechs Sitzplätzen für kürzere Strecken bis hin zu Luxusreisemodulen mit Großraumkabinen mit zwei bis sechs Sitzplätzen für den Langstreckenbetrieb. Denkbar sind ferner spezielle Personenkabinen für unterschiedlichste Bedarfsanwendungen, beispielsweise Kabinen für die Freizeitgestaltung wie Wellness, Feierveranstaltungen oder Videospiele.

Fig. 2 zeigt eine schematische Darstellung der Antriebsvorrichtung 1 nach Fig. 1 in einem zweiten Betriebszustand.

Zum Erreichen des zweiten Betriebszustandes wird die Personen-und/oder Frachtkabine 4 von der Antriebsvorrichtung 1 entkoppelt, indem die Schnittstelle 3 gelöst wird. Sofern es sich bei der Schnittstelle 3 um einen Fanghaken handelt, kann dazu die Kabine 4 im Bereich der Schnittstelle 3 mittels Stützfüßen angehoben werden. Alternativ oder zusätzlich kann die Antriebsvorrichtung 1 im Bereich der Schnittstelle 3, beispielsweise mittels eines niveauregulierbaren Fahrwerks, abgesenkt werden. Dadurch gerät die Schnittstelle 3 außer Eingriff. Sodann kann die Antriebsvorrichtung 1 verfahren werden und einen von der Kabine 4 entkoppelten Zustand, d. h. den zweiten Betriebszustand zur Vornahme von Arbeitstätigkeiten, einnehmen.

Die Arbeitseinrichtung 5 mit den Arbeitswerkzeugen und/oder ein angekoppeltes Werkzeugmodul 13 kann ebenfalls über integrierte Sensoren verfügen, die Daten über einen Datenbus oder die elektromechanische Schnittstelle 3 an die Steuerung 31 der Antriebsvorrichtung 1 übertragen.

In dem zweiten Betriebszustand ist die Antriebsvorrichtung 1 von einer Personen- und/oder Frachtkabine 4 mechanisch und/oder elektrisch entkoppelt und zur autonomen mobilen Verrichtung von verkehrsunabhängigen Pflege-, Aufräum- und/oder Überwachungsarbeiten oder sonstigen Arbeitstätigkeiten konfiguriert. Insbesondere die sensorischen und aktorischen Systeme der Arbeitseinrichtung 5 sind dabei zur Verrichtung derartiger Arbeiten konfiguriert. Dementsprechend ist die Sensoreinheit 6 der Antriebsvorrichtung 1 für die jeweilige Arbeitstätigkeit und insbesondere für das gesamte Umfeld der Antriebsvorrichtung 1 ausgerichtet, was in Fig. 2 mit zu allen Seiten gerichteten angedeuteten sensorischen Abtastungen durch die in der Arbeitseinrichtung 5 integrierte Sensoreinheit 6 symbolisiert ist. Die zur Verrichtung der Tätigkeit benötigten Werkzeuge, wie beispielsweise ein Greifarm 12, sind im zweiten Betriebszustand ausgefahren und aktiv. Ferner sind Anschlüsse für etwaige angeschlossene Werkzeugmodule aktiv.

Ein Werkzeugmodul mit Arbeitswerkzeugen kann direkt mittels einer Schnittstelle auf die Antriebsvorrichtung 1 aufgesetzt werden und Teil der Arbeitseinrichtung 5 bilden oder als Arbeitsanhängemodul 13 an die Antriebsvorrichtung 1 angekoppelt werden.

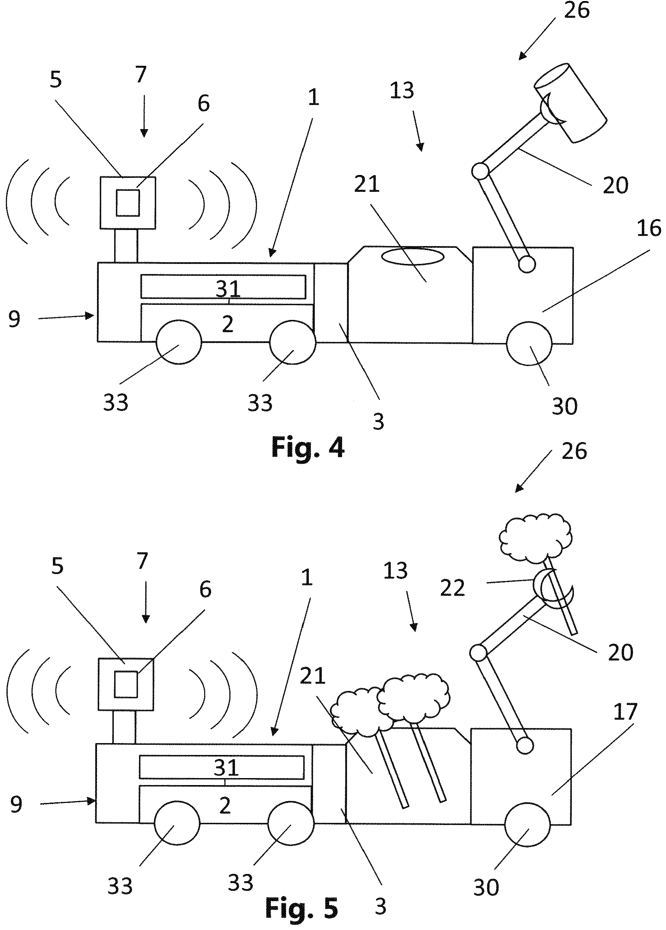

In diesem zweiten Betriebszustand dient die Antriebsvorrichtung 1 somit als autonomer Arbeitsroboter 26, der dazu ausgebildet und konfiguriert ist, verkehrsunabhängige Arbeiten bzw. Tätigkeiten autonom und mobil zu verrichten. Beispielsweise ist die Antriebsvorrichtung 1, insbesondere deren Arbeitseinrichtung 5, in dem zweiten Betriebszustand speziell für Pflegearbeiten, Aufräumarbeiten, Instandhaltungsarbeiten oder gegebenenfalls Überwachungsarbeiten konfiguriert. Auf derartige Tätigkeiten wird im Einzelnen in Bezug auf die Figuren 4 bis 7 noch näher eingegangen.

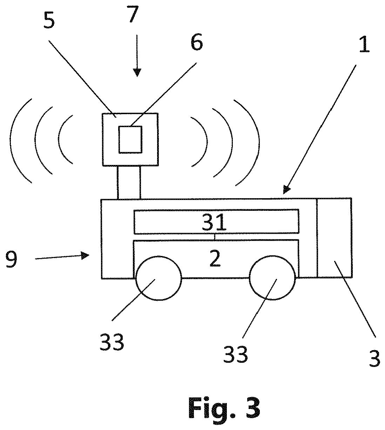

Fig. 3 zeigt eine schematische Darstellung einer Antriebsvorrichtung 1 gemäß einer weiteren Ausführungsform in einem zweiten entkoppelten Betriebszustand.

Die Arbeitseinrichtung 5 der in Fig. 3 dargestellten Arbeitsvorrichtung 1 weist eine Sensoreinheit 6 auf, welche in dem zweiten Betriebszustand einen höchsten Punkt der Antriebsvorrichtung 1 bildet. Die Sensoreinheit 6 liefert auf dieser erhöhten Position Sensordaten, insbesondere Kamerabilder der Umgebung an die Steuerung 31 der Antriebsvorrichtung 1.

Die Sensoreinheit 6 ist in Fig. 3 positionsfest ausgebildet, wobei die Sensoreinheit 6 an einer Frontseite 9 der Antriebsvorrichtung 1 einen Kopf 7 der Antriebsvorrichtung 1 bildet, der in dem zweiten Betriebszustand nach oben erhaben vorsteht. Auf diese Weise ist die Sensoreinheit 6 in einer zur Verrichtung von Pflege-, Aufräum-, Instandhaltungs- und/oder Überwachungsarbeiten geeigneten Position, etwa auf Kopfhöhe eines Menschen angeordnet, um einerseits eine Kommunikation auf Augenhöhe zu ermöglichen und andererseits die Umgebung der Antriebsvorrichtung 1 möglichst weitgehend zu überblicken.

Bei der in Fig. 3 dargestellten Ausführungsform ist die Steuereinheit 31 zur Überwachung und Steuerung eines an die Schnittstelle 3 der Antriebsvorrichtung 1 koppelbaren Werkzeugmoduls 13 anhand von Sensordaten ausgelegt. Je nach Art der zu verrichtenden Arbeit können unterschiedliche Werkzeugmodule 13 angekoppelt werden. Ferner ist die mechanische Schnittstelle 3 zur Kopplung mit einem Arbeitsgerät in Form eines Werkzeugmoduls 13 ausgelegt, welches in dem zweiten Betriebszustand mit der Antriebsvorrichtung 1 koppelbar ist.

Das Werkzeugmodul 13 ist in Fig. 4 als Müllsammelmodul 16 ausgebildet, welches einen Greifarm 20 und einen Sammelcontainer 21 aufweist. Der Greifarm 20 ist zur Aufnahme von Mülleimern ausgebildet, und ausgelegt, einen Müllinhalt von Mülleimern in den Sammelcontainer 21 des Müllsammelmoduls 16 einzuführen. Die Werkzeuge des Werkzeugmoduls 13 können bei einer Ausführungsform direkt über einen Steuerbus durch die Steuerung 31 der angekoppelten Antriebsvorrichtung 1 angesteuert werden. Alternativ verfügt das Werkzeugmodul 13 über eine eigene lokale Steuerung bzw. einen Controller zur Ansteuerung seiner Werkzeuge.

Die Sensoreinheit 6 ist dazu ausgelegt, Mülleimer, die sich in der Umgebung der Antriebsvorrichtung 1 befinden, zu erkennen, einen Füllstand eines Mülleimers zu erfassen und/oder im Falle eines sensorisch ausgestatteten und vernetzten Mülleimers mit diesem in Bezug auf seinen aktuellen Füllstand zu kommunizieren. Ferner ist die Sensoreinheit 6 ausgelegt, Sensordaten an eine Steuerung 31 der Antriebsvorrichtung 1 zu liefern, die das Müllsammelmodul 16 und insbesondere diesen Greifarm 20 zur Entleerung eines Mülleimers über die Schnittstelle 3 ansteuert. Ist ein vorbestimmter Füllstand erreicht, wird der jeweilige Mülleimer mittels der Antriebsvorrichtung 1 autonom angefahren und mittels des Greifarms 20 in den Sammelcontainer 21 ausgeleert.

Beispielsweise kann die Müllsammlung so lange durchgeführt werden, bis der Sammelcontainer 21 des Müllsammelmoduls 16 voll ist. Anschließend kann die Antriebsvorrichtung 1 das Müllsammelmodul 16 des angekoppelten Werkzeugmoduls 13 autonom zu einer Sammelstelle transportieren, es dort abkoppeln, und anschließend wieder zur Kopplung mit einer Personen- und/oder Frachtkabine 4 oder für die Verrichtung einer weiteren Grünpflege-, Aufräum-, Instandhaltungs- und/oder Überwachungsarbeit eingesetzt werden. Insbesondere kann der Antriebsvorrichtung 1 dazu über eine Cloud Anbindung direkt eine neue Tätigkeit zugewiesen werden. Hierzu verfügt die Antriebsvorrichtung 1 vorzugsweise über ein Kommunikationsmodul zur Herstellung einer drahtlosen Kommunikationsverbindung mit einem Zugangspunkt eines Datennetzes, welches mit einer zentralen Steuerung eines Verkehrsmittelwechselsystems verbunden ist.

Fig. 5 zeigt eine Antriebsvorrichtung 1 gekoppelt mit einem Werkzeugmodul 13 gemäß einer weiteren Ausführungsform.

Gemäß dieser Ausführungsform ist ein Grünpflegemodul 17 mit der mechanischen Schnittstelle 3 gekoppelt. Das Grünpflegemodul 17 unterscheidet sich von dem Müllsammelmodul 16 im Wesentlichen durch die Auslegung seiner Einzelkomponenten, insbesondere des Greifarms 20 und des Sammelcontainers 21.

Die Arbeitseinrichtung 5 ist vorzugsweise zur Grünpflege ausgelegt. Insbesondere ist die Sensoreinheit 6 dazu ausgelegt, beispielsweise einen Wuchszustand von Bäumen und Sträuchern in der Umgebung der Antriebsvorrichtung 1 zu erkennen, mit einem Sollzustand abzugleichen, und sofern der Wuchszustand über den Sollzustand hinausgeht, den Greifarm 20 zur Entfernung von Grünmaterial anzusteuern. Der Greifarm 20 weist dazu einen Astscheren-Aktuator 22 auf. Der Sammelcontainer 21 ist bei der in Fig. 5 dargestellten Ausführungsform vorzugsweise zur Aufnahme von Grünschnitt ausgelegt.

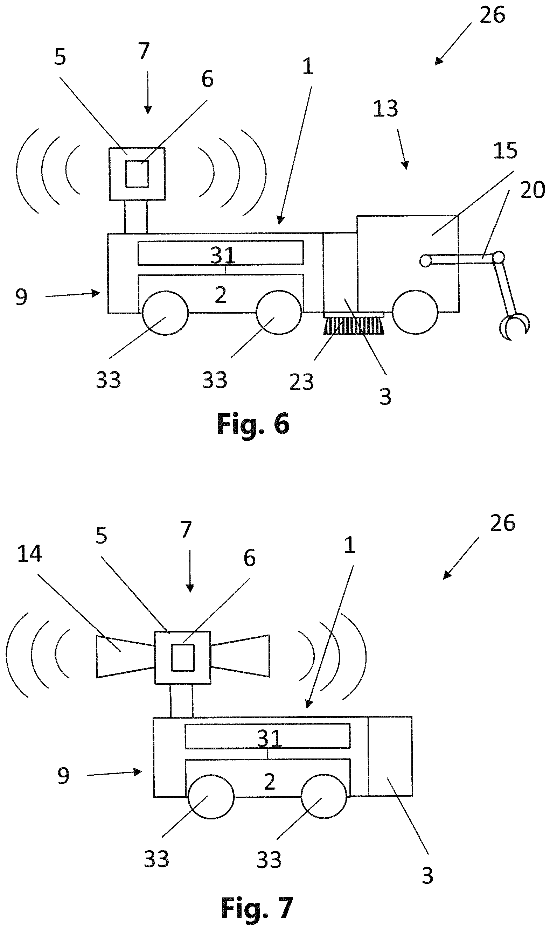

Fig. 6 zeigt eine Antriebsvorrichtung 1 gekoppelt mit einem Werkzeugmodul 13 gemäß einer weiteren Ausführungsform.

Das Werkzeugmodul 13 gemäß Fig. 6 ist als Straßeninstandhaltungsmodul 15 ausgebildet und mit der elektromechanischen Schnittstelle 3 der Antriebsvorrichtung 1 gekoppelt. Die Sensoreinheit 6 der Antriebsvorrichtung 1 ist hierbei vorzugsweise dazu ausgelegt, einen Verschmutzungszustand oder Beschädigungen von Straßen zu erkennen, auf denen sich die Antriebsvorrichtung 1 autonom bewegt. Beispielsweise ist dazu eine geeignete Kamera und ein entsprechend ausgelegtes Bildverarbeitungssoftwaremodul vorgesehen. Bei einer möglichen Ausführungsform verfügt die Sensoreinheit 6 über ein Surround View System mit Fischaugenkameras.

Das in Fig. 6 dargestellte Straßeninstandhaltungsmodul 15 weist als spezielles Werkzeugmodul 13 eine Reinigungseinrichtung 23, beispielsweise in Form einer Straßenkehrbürste, auf, die zur Straßenreinigung ausgelegt ist.

Sofern ein erhöhter Verschmutzungszustand einer Straße mittels der von der Sensoreinheit 6 gelieferten Sensordaten identifiziert wird, steuert die Steuerung 31 der Antriebsvorrichtung 1 den Antriebsstrang 2 der Antriebsvorrichtung 1 zum Anfahren der zu reinigenden Straßenabschnitte an und aktiviert bei Erreichen der zu reinigenden Straßenabschnitte über die Schnittstelle 3 die Reinigungseinrichtung 23 des an die Antriebsvorrichtung 1 angekoppelten Werkzeugmoduls 13.

Ergänzend weist das Straßeninstandhaltungsmodul 15 als angekoppeltes Werkzeugmodul 13 ebenfalls einen Greifarm 20 auf, welcher zum Aufsammeln größerer Verschmutzungsgegenstände vom Boden der zu reinigenden Straße ausgelegt ist. Darüber hinaus kann der Greifarm 20 zur provisorischen Beseitigung oder Absperrung von sensorisch detektierten Straßenschäden ausgelegt sein. Bei Erkennung eines Schadens kann der Greifarm 20 durch die Steuerung 31 angesteuert werden, um z.B. vorbereitende Maßnahmen zu treffen, beispielsweise die aufgefundene Schadensstelle mit in dem Straßeninstandhaltungsmodul 15 des angekoppelten Werkzeugmoduls 13 aufbewahrten Abstandselementen abzusperren oder dergleichen. Ein derartiger Schaden kann über eine Cloudanbindung der Steuerung 31 der Antriebsvorrichtung 1 an einen zentralen Server des Verkehrsmittelwechselsystems gemeldet werden. Eine zentrale Steuerung des Verkehrsmittelwechselsystems kann in der Nähe befindliche andere Antriebsvorrichtungen 1, die über geeignete Werkzeuge verfügen, anweisen eine Straßenreparatur, insbesondere mittels eines Straßenreparaturmoduls, auszuführen.

Fig. 7 zeigt eine schematische Darstellung einer Antriebsvorrichtung 1 gemäß einer weiteren Ausführungsform in einem zweiten Betriebszustand.

Bei dieser Ausführungsform ist die Arbeitseinrichtung 5 der Antriebsvorrichtung 1 in der Lage, ohne ein zusätzliches angekoppeltes Werkzeugmodul 13 Überwachungstätigkeiten als Arbeits- bzw. Überwachungsroboter 26 auszuführen und ist vorzugsweise zur Sicherheitsüberwachung mit geeigneten Sensoren 14 versehen. Beispielsweise können besonders hochauflösende und/oder mit einer Teleoptik ausgerüstete Kameras als Sensoren 14 vorgesehen sein, welche detaillierte Beobachtungen in einer über die Anforderungen für autonomes Fahren hinausgehenden Entfernung zulassen. Alternativ oder zusätzlich können die Sensoren 14 Wärmebildkameras, Nachtsichtkameras oder dergleichen aufweisen, welche Bilder liefern, deren Qualität über die für das autonome Fahren notwendige Bildqualität hinausgehen.

Die Steuereinrichtung 31 kann ein künstliches Intelligenzmodul KIM aufweisen, um Gefahrenpotenziale in der Umgebung der Antriebsvorrichtung 1 zu erkennen und auszuweiten.

In einer solchen Konfiguration kann die Antriebsvorrichtung 1 in ihrem zweiten Betriebszustand beispielsweise eine Überwachungsdrohne zur Gebäudebewachung einsetzen, die beispielsweise drahtlose durch die Steuereinrichtung 31 der Antriebsvorrichtung 1 in dessen lokaler Umgebung ferngesteuert wird.

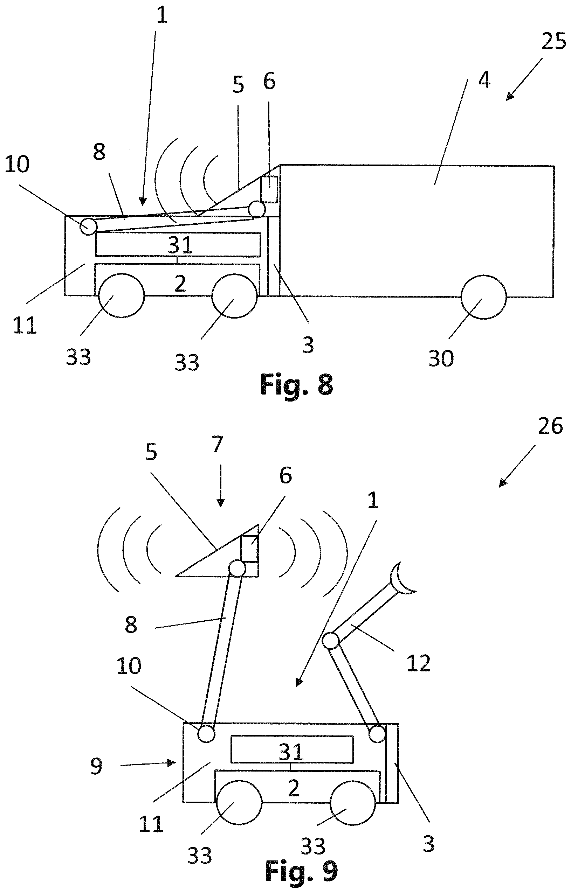

Fig. 8 zeigt eine schematische Darstellung einer Antriebsvorrichtung 1 gemäß einer weiteren Ausführungsform in einem ersten Betriebszustand.

Die in Fig. 8 gezeigte Ausführungsform unterscheidet sich von der Ausführungsform nach Fig. 1 insbesondere dadurch, dass die Sensoreinheit 6 der Arbeitseinrichtung 5 hier positionsverlagerbar ausgebildet ist.

In dem in Fig. 8 dargestellten ersten Betriebszustand der Antriebsvorrichtung 1 ist die Sensoreinheit 6 in einer aerodynamisch günstigen Position in eine Fahrzeughülle der Antriebsvorrichtung 1 und der Personen- und/oder Frachtkabine 4 integriert. Beispielhaft ist die Sensoreinheit 6 im Bereich der Schnittstelle 3 angeordnet und fungiert als Teil der Fahrzeughülle als Spoiler, bzw. Übergangselement zwischen Kabine 4 und Antriebsvorrichtung 1.

Bei weiteren Ausführungsformen ist es auch möglich, dass sich die Sensoreinheit 6 in dem ersten Betriebszustand bis in die Personen-und/oder Frachtkabine 4 erstreckt und darin zumindest teilweise versenkt oder formschlüssig integriert ist, beispielsweise im Bereich einer Windschutzscheibe einer Personenkabine.

Zur Verlagerung der Position der Sensoreinheit 6 weist die Arbeitseinrichtung 5 der Antriebsvorrichtung 1 einen Schwenkarm 8 auf, der über ein im Bereich einer Frontseite 9 der Antriebsvorrichtung 1 positioniertes aktorisch verstellbares Schwenklager 10 mit dem den Antriebsstrang 2 der Antriebsvorrichtung 1 enthaltenden Unterbau 11 gekoppelt ist.

Fig. 9 zeigt die Antriebsvorrichtung 1 nach Fig. 8 in einem zweiten Betriebszustand.

In dem zweiten Betriebszustand ist die Antriebsvorrichtung 1 von der Kabine 4 entkoppelt, was, wie in Bezug auf Fig. 2 beschrieben, vorgenommen werden kann. Im Unterschied zu Fig. 2 ändert sich jedoch zusätzlich die Anordnung der Arbeitseinrichtung 5, da der Schwenkarm 8 durch ein Verschwenken um das Schwenklager 10 aufgestellt wird und auf diese Weise die Sensoreinheit 6 nach oben in eine erhabene Position verlagert wird, in welcher sie nach oben vorsteht und einen Kopf 7 der Antriebsvorrichtung 1 bildet.

Optional kann die Arbeitseinrichtung 5 ferner einen in den Unterbau 11 versenkbaren Greifarm 12 aufweisen.

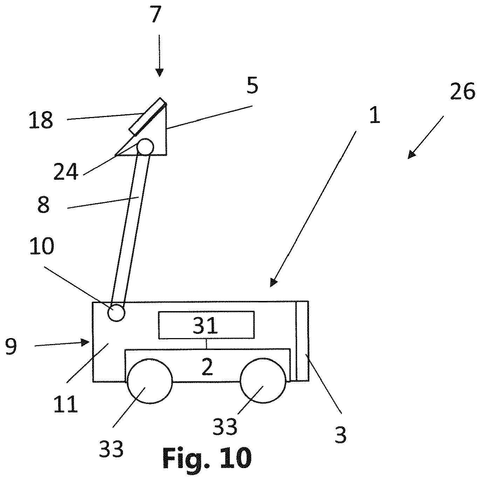

Fig. 10 zeigt eine schematische Darstellung einer Antriebsvorrichtung 1 gemäß einer weiteren Ausführungsform in einem zweiten Betriebszustand.

Bei dieser Ausführungsform ist im Bereich der Sensoreinheit 6 eine Mensch-Maschine-Schnittstelle 18 vorgesehen. Diese dient zur Kommunikation mit natürlichen Personen im Arbeitsumfeld der zu verrichtenden Tätigkeit. Beispielsweise kann auf diese Weise ein Sicherheitsbereich für eine Arbeitsstelle abgesperrt werden, indem sich dort befindliche Personen über die Mensch-Maschine-Schnittstelle 18 darum gebeten werden, den Sicherheitsbereich der Arbeitsstelle zu räumen. Ferner ist über die Mensch-Maschine Schnittstelle 18 auch eine Kommunikation im Straßenverkehr im ersten Betriebszustand möglich, beispielsweise ist eine Verständigung zur Regelung der Vorfahrt möglich.

Über ein zweites aktuatorisch frei schwenkbares und um 360° drehbares Gelenk 24 des Kopfes 7 kann die Mensch-Maschine-Schnittstelle 18 situationsangepasst geneigt werden.

Fig. 11 zeigt eine perspektivische Ansicht eines Transportfahrzeugs 25 mit einer Antriebsvorrichtung 1 und einer Kabine 4 gemäß einer weiteren Ausführungsform in dem ersten Betriebszustand. Bei der hier dargestellten Ausführungsform handelt es sich bei dem Verbund aus Antriebsvorrichtung 1 und einer Personenkabine 4 um ein Transportfahrzeug 25 für den Langstreckenbetrieb.

Die Antriebsvorrichtung 1 ist, wie in Bezug auf die Figuren 8 bis 10 erläutert, mit einem positionsverlagerbaren Kopf 7 ausgebildet. Die Kabine 4 und die Antriebsvorrichtung 1 weisen eine sich schräg erstreckende Schnittstelle 3 auf, wobei sich ein oberer Bereich der Kabine 4 über den Unterbau 11 der Antriebsvorrichtung 1 erstreckt. In dem in der Fahrzeugaußenhülle integrierten Zustand des Kopfes 7 ist dieser bis in den oberen Bereich 27 der Kabine 4 verlagert und in dem oberen Bereich 27 versenkt angeordnet. In dem in Fig. 11 gezeigten ersten Betriebszustand ist der Kopf 7 somit aerodynamisch günstig in die Fahrzeughülle des Transportfahrzeugs 25 integriert.

Fig. 12 zeigt das Transportfahrzeug 25 gemäß Fig. 11 während des Entkoppelns von Antriebsvorrichtung 1 und Kabine 4. Zum Entkoppeln wird zunächst der Kopf 7 über den Schwenkarm 8 um das sich im Bereich der Frontseite 9 befindliche Schwenklager 10 geschwenkt und somit aus dem oberen Bereich 27 der Kabine 4 herausgehoben. Ferner wird die Kabine 4 zum Entkoppeln durch ausfahrbare vordere Stützen 28 abgestützt. Auf diese Weise ist die Kabine 4 nun statisch gesichert und der Formschluss zwischen Antriebsvorrichtung 1 und Kabine 4 kann durch Entkoppeln der Schnittstelle 3 gelöst werden.

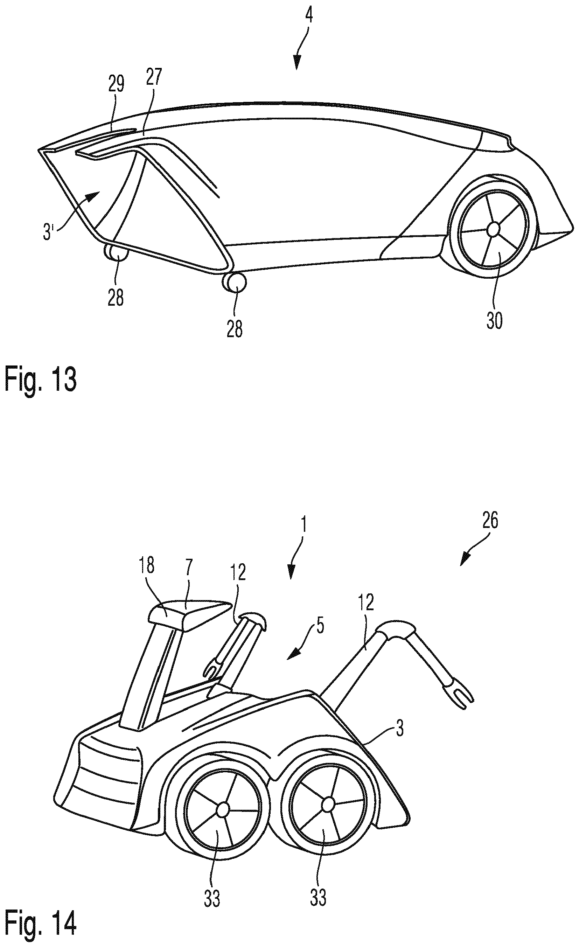

Fig. 13 zeigt die entkoppelte Kabine 4 nach dem Entkoppelvorgang. Die Kabine 4 steht nun selbstständig auf ihren hinteren Rädern 30 und vorderen Stützen 28 geparkt. Der obere Bereich 27 der Kabine 4 weist eine freie Ausnehmung 29 auf, welche zur Integration des Kopfes 7 im ersten Betriebszustand ausgebildet ist. Dargestellt ist in Fig. 13 ferner die Gegenschnittstelle 3' der Kabine 4, welche zur formschlüssigen elektromechanischen Kopplung mit der Antriebsvorrichtung 1 ausgebildet ist.

Fig. 14 zeigt die entkoppelte Antriebsvorrichtung 1 gemäß Fig. 12 in dem zweiten Betriebszustand nach dem Entkoppelvorgang. Bei der dargestellten Ausführungsform weist die Arbeitseinrichtung 5 der Antriebsvorrichtung 1 zwei integrierte universelle Greifarme 12 auf, welche zur Verrichtung von Pflege-, Aufräum- und/oder Instandhaltungsarbeiten ausgebildet sind. Die Greifarme 12 sind im Bereich der Schnittstelle 3 versenkbar gelagert. Im ersten Betriebszustand sind sie in der Schnittstelle 3 versenkt und im zweiten Betriebszustand werden die Greifarme 12 ausgefahren. Die Antriebsvorrichtung 1 weist vier Räder 33 auf und kann somit in dem zweiten Betriebszustand ohne die Kabine 4 fahrdynamisch bewegt werden. Ferner ist mit den vier Rädern 33 für Pflege-, Aufräum- und/oder Instandhaltungsarbeiten ein sicherer Stand bereitgestellt.

Der Kopf 7 weist, wie bereits in Bezug auf Fig. 10 erläutert, eine Mensch-Maschine-Schnittstelle 18 mit einer Anzeigeeinrichtung auf. Zur visuellen Kommunikation mit Personen ist die Anzeigeeinrichtung ausgelegt, Personen in der Umgebung der Antriebsvorrichtung 1 emotional anzusprechen. Hier ist dies beispielsweise mit der Darstellung einer schematisierten Augenpartie realisiert, welche menschliche Mimik imitiert. Insbesondere weist der Schwenkarm 8 auch hier ein zweites aktuatorisch frei schwenkbares Gelenk 24 auf, welches eingesetzt werden kann, um eine derartige Mimik durch Nicken des Kopfes 7 zu unterstützen. Der Kopf 7 ist vorzugsweise um 360° drehbar.

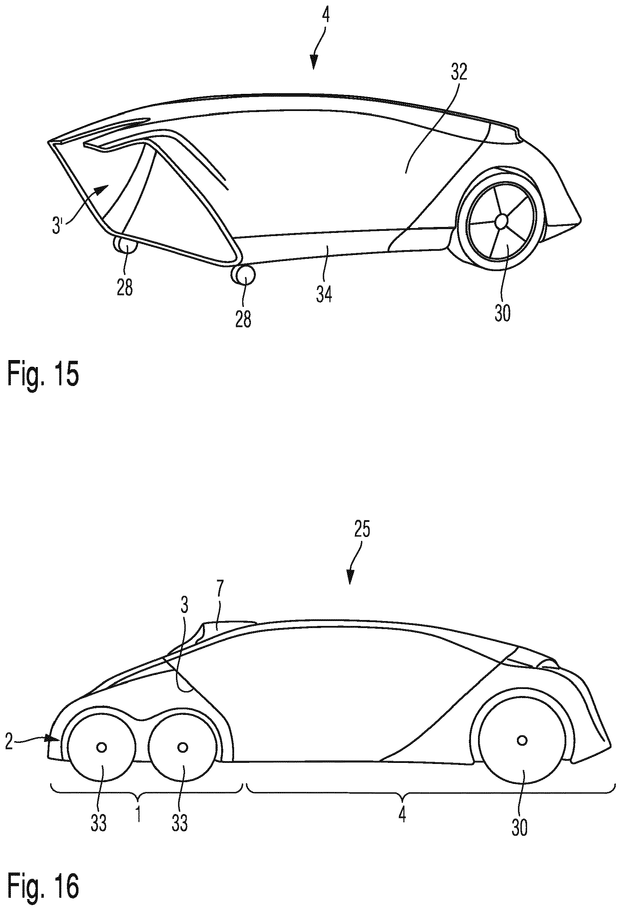

Fig. 15 zeigt die Kabine 4 gemäß Fig. 13 beim Aufladen ihrer Batterie 34, die während des Parkens über eine Ladesäule aufgeladen werden kann. Die Personenkabine 4 für den Langstreckenbetrieb weist eine eigene Batterie 34 und einen Zusatzmotor 32 auf. Insbesondere ist die Batterie 34 mit der Steuerung 31 über die Verbindung der Gegenschnittstelle 3' mit der Schnittstelle 3 koppelbar. Selbiges gilt auch für den Zusatzmotor 32. Die Batterie 34 weist im Vergleich zu einer Batterie der Antriebsvorrichtung 1 eine höhere Kapazität und der Zusatzmotor 32 eine höhere Antriebsleistung auf. Auf diese Weise sind im Langstreckenbetrieb große Reichweiten und hohe Reisegeschwindigkeiten des Transportfahrzeugs 25 möglich. Das Aufladen der Batterie 34 erfolgt beispielsweise induktiv in dem dargestellten geparkten Zustand. Die Antriebsvorrichtung 1 stellt die Kabine 4 dazu auf einem entsprechend zum induktiven Aufladen geeigneten Parkplatz ab.

Fig. 16 zeigt eine Seitenansicht eines Transportfahrzeugs 25 mit einer Antriebsvorrichtung 1 und einer angekoppelten Kabine 4 gemäß einer noch weiteren Ausführungsform. Diese Ausführungsform unterscheidet sich von der Ausführungsform nach Fig. 11 durch eine unterschiedliche Auslegung der Räder 30, 33. Die vorderen Räder 33 der Antriebsvorrichtung 1 und auch die damit verbundenen Motoren des Antriebsstrangs 2 sind für den innerstädtischen Betrieb und die Verrichtung von Tätigkeiten in einer urbanen Umgebung ausgelegt. Die hinteren Räder 30 der Kabine 4 sind hingegen deutlich größer als die vorderen Räder 33 ausgelegt und an eine vergleichsweise deutlich höhere Leistung des Zusatzmotors 32 der Kabine 4 angepasst. Das Transportfahrzeug 25 weist in einer Konfiguration für den Langstreckenbetrieb somit eine im Vergleich zu der Antriebsvorrichtung 1 alleine deutlich höhere Batteriekapazität und Antriebsleistung auf. Durch das lang gezogene Heck des Transportfahrzeugs 25 und die insgesamt windschnittige Form wird ein sehr günstiger cw-Wert erreicht, sodass Langstrecken effizient und dennoch mit hoher Geschwindigkeit absolviert werden können. Das Transportfahrzeug 25 ist von seiner gesamten Größe und von den Fahrleistungen sowie von der Größe der Kabine 4 in etwa mit einer Mittelklasselimousine vergleichbar.

Die Steuerung 31 der Antriebsvorrichtung 1 ist vorzugsweise an eine Sensoreinheit 6 der Antriebsvorrichtung 1 angeschlossen, um optische, akustische und sonstige Sensordaten während des Betriebs zu erhalten. Ferner kann die Steuerung 31 auch Sensordaten über die Schnittstelle 3 erhalten, die von Sensoren der angekoppelten Werkzeug- oder Transportmodule stammen. Die Steuerung 31 der Antriebsvorrichtung 1 steuert im ersten Betriebszustand der Antriebssteuerung 1 seine Bewegungen autonom auf Basis der Sensordaten, beispielsweise mittels eines künstlichen Intelligenzmoduls KIM, das ein trainiertes neuronales Netzwerk beinhaltet. Das neuronale Netzwerk NN verarbeitet die zugeführten Sensordaten in Echtzeit und generiert Steuersignale für den Antriebsstrang 2 der Antriebsvorrichtung 1. Die Steuerung 31 der Antriebsvorrichtung 1 steuert im zweiten Betriebszustand nicht nur die Bewegung der Antriebsvorrichtung 1 während der Verrichtung der jeweiligen Arbeitstätigkeit, sondern auch die Arbeitseinrichtung 5 autonom aufgrund der Sensordaten und Sensorsignale. Das Umschalten zwischen den beiden Betriebszuständen der Antriebsvorrichtung 1 erfolgt bei einer möglichen Ausführungsform durch einen von einer zentralen Steuerung 35 eines Verkehrsmittelwechselsystems 37 erhaltenen Umschaltbefehl, der durch einen Transceiver der Antriebsvorrichtung 1 über eine drahtlose Kommunikationsverbindung empfangen wird.

Fig. 17 zeigt beispielhaft und schematisch ein Verkehrsmittelwechselsystem 37 mit einer zentralen Steuerung 35 mit Zugriff auf eine Datenbank 36.

Bei einer alternativen Ausführungsform erfolgt das Umschalten der Antriebsvorrichtung 1 zwischen den beiden Betriebszuständen auch autonom ohne Empfang eines Umschaltbefehls von einer zentralen Steuerung 35 durch Auswertung der lokal zur Verfügung stehenden Sensordaten, beispielsweise durch ein künstliches Intelligenzmodul der Steuerung 31 der Antriebsvorrichtung 1. Solange die Steuerung 31 der Antriebsvorrichtung 1 von der entfernten zentralen Steuerung 35 des Verkehrsmittelwechselsystems 37 keinen expliziten Befehl zur Vornahme einer bestimmten Beförderungstätigkeit oder Arbeitstätigkeit empfängt, wertet sie fortlaufend die erhaltenen Sensordaten der Umgebung aus und sucht sich autonom sinnvolle Tätigkeiten, die es mit den ihr lokal zur Verfügung stehenden Werkzeugen in der lokalen Umgebung ausführen kann. Die Steuerung 31 der Antriebsvorrichtung 1 kann über eine drahtlose Schnittstelle der entfernten zentralen Steuerung 35 des Verkehrsmittelwechselsystems 37 melden, welche Tätigkeit sie momentan ausführt. Die zentrale Steuerung 35 kann eine Vielzahl von Rückmeldungen der in einem Gebiet verteilt befindlichen Antriebsvorrichtungen 1 auswerten, um daraus einen in dem Gebiet momentan bestehenden Beförderungs- und/oder Arbeitsbedarf zu berechnen. Hierzu kann die zentrale Steuerung 35 ebenfalls über ein neuronales Netzwerk verfügen. Die zentrale Steuerung 35 kann die Steuerung 31 einer in dem Gebiet befindlichen Antriebsvorrichtung 1 über eine drahtlose Kommunikationsverbindung beispielsweise darüber informieren, welche Tätigkeit die Antriebsvorrichtung 1 ausführen soll und gegebenenfalls für eine Arbeitstätigkeit geeignete Werkzeugmodule 13, die sich in der Nähe zu der Antriebsvorrichtung 1 befinden, angeben und die momentane Position melden und die betreffende Antriebsvorrichtung 1 zum Ankoppeln eines geeigneten Werkzeugmoduls 13 zu dessen Abstellplatz hinleiten. Alternativ fährt die Antriebsvorrichtung 1 autonom zu einem geeigneten Werkzeugmodul 13, das sich in der lokalen Umgebung der Antriebsvorrichtung 1 befindet. Der in einem Gebiet, beispielsweise einem Stadtteil, bestehende Beförderungsbedarf und/oder Arbeitsbedarf wird bei einer möglichen Ausführungsform durch die zentrale Steuerung 35 anhand vorhandener Datenmodelle und/oder Kartendaten des Gebietes auf Grundlage an sie übermittelter Sensordaten und Tätigkeitsrückmeldungen berechnet. In Abhängigkeit von dem ermittelten lokalen Beförderungsbedarf und/oder Arbeitsbedarf werden die in dem betreffenden Gebiet vorhandenen Antriebsvorrichtungen 1 zur Durchführung der entsprechenden Tätigkeit angewiesen und in den entsprechenden Betriebszustand versetzt. Die Antriebsvorrichtungen 1 führen dann die angewiesenen Tätigkeiten weitestgehend autonom durch und melden schließlich die erfolgreiche Ausführung der Tätigkeit an die zentrale Steuerung 35 zurück. Die Kommunikation zwischen der lokalen Steuerung 31 der Antriebsvorrichtung 1 und der auf einem Server implementierten zentralen Steuerung 35 des Verkehrsmittelwechselsystems 37 kann über ein Backbone-Datennetzwerk mit Access Points erfolgen, die einen drahtlosen Link zu einem Transceiver der Antriebsvorrichtung 1 bereitstellen. Die drahtlose Kommunikation kann über ein 5G-Netz bereitgestellt werden. Weiterhin kann eine drahtlose Verbindung auch unter Einbeziehung von Satelliten aufgebaut werden. Die Antriebsvorrichtungen 1 verfügen vorzugsweise jeweils über GPS-Receiver und melden ihre momentanen Positionen innerhalb des Gebietes an die zentrale Steuerung 35. Auch geparkte Kabinen 4 oder geparkte Werkzeugmodule 13 können ihre momentanen Abstell-Positionen über eine drahtlose Schnittstelle und ein Datennetzwerk an die zentrale Steuerung 35 des Verkehrsmittelwechselsystems 37 melden. Sensoren der Antriebsvorrichtung 1 und/oder eines Werkzeugmoduls 13 sowie in dem Gebiet verstreut angebrachte Sensoren können zusätzlich Sensordaten, beispielsweise Temperaturdaten oder Luftfeuchtigkeitsdaten an die zentrale Steuerung melden. Aus diesen Umweltsensordaten des betreffenden Gebiets kann ein Arbeitsbedarf in dem Gebiet berechnet werden, beispielsweise die notwendige Bewässerung einer in dem Gebiet befindlichen Grünanlage oder Parks bei hoher Temperatur und/oder niedriger Luftfeuchtigkeit.

Zwei Antriebsvorrichtungen 1 können auch miteinander über eine Car-to-Car Kommunikationsverbindung drahtlos kommunizieren, beispielsweise um angekoppelte Werkzeugmodule 13 auszutauschen oder um Informationen hinsichtlich Arbeits- oder Beförderungstätigkeiten auszutauschen.

Fig. 17 zeigt exemplarisch und schematisch ein Beispiel für ein erfindungsgemäßes Verkehrsmittelwechselsystem 37. Das Verkehrsmittelwechselsystem 37 ist für ein bestimmtes Gebiet vorgesehen, welches schematisch in Fig. 17 von oben dargestellt ist. Bei dem dargestellten Gebiet handelt es sich um einen Stadtteil mit mehreren horizontal und vertikal verlaufenden Straßen, wie schematisch in Fig. 17 dargestellt. Auf den Straßen können sich Transportfahrzeuge 25, aber auch Arbeitsroboter 26 bewegen. Bei dem in Fig. 17 dargestellten Beispiel bewegen sich Transportfahrzeuge 25-1, 25-2, 25-3, 25-4, 25-5 auf dem Straßennetz des Gebietes, wobei jedes Transportfahrzeug 25 eine Antriebsvorrichtung 1 und eine angekoppelte Kabine 4 umfasst. Einander entgegenkommende Transportfahrzeuge 25-1, 25-3 können beispielsweise über eine Car-to-Car-Kommunikationsverbindung miteinander drahtlos kommunizieren. Bei dem in Fig. 17 dargestellten Beispiel bewegt sich ein Arbeitsroboterfahrzeug 26-2 in der gleichen Richtung wie das Transportfahrzeug 25-2. Das Arbeitsroboterfahrzeug 26 umfasst eine Antriebsvorrichtung 1 und ein daran angekoppeltes Werkzeugmodul 13, insbesondere ein Straßeninstandhaltungsmodul 15, wie es in Fig. 6 dargestellt ist. Bei dem in Fig. 17 dargestellten Beispiel führt beispielsweise eine Antriebsvorrichtung 1-1 in einem bestimmten Teilbereich des Gebietes eine Arbeitstätigkeit aus, beispielsweise Mähen eines Rasens. Eine weitere Antriebsvorrichtung 1-2 führt mithilfe ihrer Arbeitseinrichtung 5 in einem weiteren Gebiet selbstständig eine Tätigkeit durch, beispielsweise eine Instandhaltungs- oder Überwachungstätigkeit. Verschiedene Kabinen 4-1, 4-2 können beispielsweise auf einem Parkplatz abgestellt sein, um mit einer Antriebsvorrichtung 1 gekoppelt zu werden. Die abgestellten Kabinen 4-1, 4-2 befinden sich beispielsweise in Garagen von Nutzern, um diesen bei Bedarf eine Transportmöglichkeit zu bieten. Weiterhin können ankoppelbare Werkzeugmodule 13-1, 13-2 ebenfalls an bestimmten Positionen innerhalb des Gebietes abgestellt sein, sodass sie mit Antriebsvorrichtungen 1 gekoppelt werden können, sofern hierfür ein Bedarf entsteht. Verschiedenartige Werkzeugmodule 13-1, 13-2, 13-3 können in verschiedenen Teilgebieten des Gebiets zur Ankopplung an Antriebsvorrichtungen 1 bereitstehen. Mehrere Transportfahrzeuge 25-4, 25-5 können auch miteinander kommunizieren, um temporär einen Transportzug zu bilden, wie in Fig. 17 schematisch dargestellt. Hierzu können die Antriebsvorrichtungen 1-i der Transportfahrzeuge 25 über eine Car-to-Car-Kommunikationsverbindung miteinander kommunizieren. Die Antriebsvorrichtungen 1-i verfügen über Kommunikationsmodule bzw. Transceiver, um beispielsweise über Access Points mit der zentralen Steuerung 35 des Verkehrsmittelwechselsystems 37 zu kommunizieren. Die zentrale Steuerung 35 des Verkehrsmittelwechselsystems 37 hat Zugriff auf eine zentrale oder verteilte Datenbank 36, wie in Fig. 17 dargestellt. Die verschiedenen Antriebsvorrichtungen 1-i verfügen vorzugsweise über GPS-Receiver und können ihre momentane Position innerhalb des Gebietes über Access Points und/oder über Satelliten an die zentrale Steuerung 35 des Verkehrsmittelwechselsystems 37 melden. Die zentrale Steuerung 35 hat Zugriff auf Kartendaten des betroffenen Gebietes, die beispielsweise in der Datenbank 36 abgespeichert sind. Die zentrale Steuerung 35 berechnet auf Grundlage von Datenmodellen und/oder den gespeicherten Kartendaten des Gebietes sowie auf Basis übermittelter Sensordaten sowie Tätigkeitsrückmeldungen der verschiedenen Antriebsvorrichtungen 1 einen momentanen Beförderungs- und/oder Arbeitsbedarf innerhalb des betreffenden Gebietes. Auf Grundlage des ermittelten Beförderungsbedarfs und/oder Arbeitsbedarfs werden die in dem betreffenden Gebiet vorhandenen Arbeitsvorrichtungen 1 und/oder Werkzeugmodule 13 zur Durchführung der entsprechenden Tätigkeiten angewiesen und in den entsprechenden Betriebszustand dynamisch versetzt. Weiterhin können Nutzer innerhalb des Gebietes über tragbare Nutzerendgeräte, beispielsweise Smartphones, einen Beförderungsbedarf und/oder Arbeitsbedarf an die zentrale Steuerung 35 des Verkehrsmittelwechselsystems 37 melden. Meldet beispielsweise ein Nutzer U1 mittels eines tragbaren Nutzerendgerätes einen Beförderungsbedarf an die zentrale Steuerung 35, so kann diese ein Transportfahrzeug 25 oder einen Transportfahrzeugzug zu der gemeldeten Position des Nutzers leiten, wie in Fig. 17 schematisch dargestellt. Ein anderer Nutzer U2 kann beispielsweise mittels seines tragbaren Nutzerendgerätes ein Arbeitsroboterfahrzeug, beispielsweise das Arbeitsroboterfahrzeug 26-2, anfordern, sodass es beispielsweise eine bestimmte Arbeitstätigkeit, insbesondere Straßeninstandhaltungstätigkeit, vor Ort vornimmt. Ein dritter Nutzer U3 kann beispielsweise mittels seines tragbaren Nutzerendgerätes oder mittels eines mit der zentralen Steuereinheit 35 verbundenen PCs eine in seiner Nähe befindliche Antriebsvorrichtung 1-3 zur Durchführung einer Beförderungstätigkeit anfordern. Die Antriebsvorrichtung 1-3 kann beispielsweise mit der geparkten Fahrkabine 4-2 des Nutzers 4-3 gekoppelt werden und ihn an eine Zielposition transportieren.

Sowohl die Antriebsvorrichtungen bzw. Antriebsmodule 1 als auch ankoppelbare Werkzeugmodule 13 können über Sensoren verfügen, die Sensordaten, beispielsweise Wetterdaten (Luftfeuchtigkeit, Temperatur, Luftdruck), an die zentrale Steuerung 35 melden. Die Sensordaten können auch lokal, beispielsweise zur Erkennung von Straßenschäden, verarbeitet werden, insbesondere mit Hilfe eines neuronalen Netzwerkes. Die erkannten Straßenschäden können dann der zentralen Steuerung 35 unter Angabe der Position gemeldet werden.

In dem Gebiet können eine Vielzahl intelligenter Infrastruktureinrichtungen vorgesehen sein, die einen Tätigkeitsbedarf an die zentrale Steuerung 35 melden. Beispielsweise erkennt ein Papierkorb oder Müllcontainer die Notwendigkeit seiner Entleerung und meldet dies an die zentrale Steuerung 35, welche einen geeigneten Arbeitsroboter 26 oder geeignetes Antriebsmodul zur Entleerung des Papierkorbes bzw. Müllcontainers zu dessen Position leitet. Alternativ fährt die Antriebsvorrichtung 1 bzw. der Arbeitsroboter 26 auch autonom zu dem Papierkorb bzw. dem Müllcontainer.

Die verschiedenen Antriebsvorrichtungen 1-i können auch selbstständig bzw. autonom einen lokalen Beförderungsbedarf und/oder Arbeitsbedarf erkennen und anschließend autonom durchführen. Beispielsweise kann eine Antriebsvorrichtung 1, an die eine Personenkabine 4 gekoppelt ist, während des Entlangfahrens auf einer Straße einen winkenden Nutzer U anhand einer charakteristischen Handbewegung erkennen und dort anhalten, um den Nutzer U zu seiner Beförderung in die Kabine 4 aufnehmen. Der Nutzer U teilt beispielsweise über eine Nutzerschnittstelle der Antriebsvorrichtung 1 die gewünschte Zieladresse mit. Die verschiedenen Antriebsvorrichtungen 1-i führen vorzugsweise ständig eine Tätigkeit aus, d.h. entweder eine Beförderungstätigkeit oder eine Arbeitstätigkeit. Nur ausnahmsweise sind Arbeitsvorrichtungen 1-i inaktiv, insbesondere wenn ihnen kein Beförderungsbedarf und/oder Arbeitsbedarf gemeldet wird und sie auch keine sinnvolle Tätigkeit in ihrer Umgebung erkennen können. Die verschiedenen Arbeitsvorrichtungen 1-i können entweder direkt miteinander über eine lokale Kommunikationsverbindung drahtlos kommunizieren oder indirekt über die zentrale Steuerung 35 des Verkehrsmittelwechselsystems 37. Beispielsweise kann eine Antriebsvorrichtung 1-i anhand der ihr zur Verfügung stehenden Sensordaten einen Bedarf für eine sinnvolle Tätigkeit bzw. Arbeitstätigkeit autonom erkennen, aber beispielsweise nicht über die geeigneten Arbeitswerkzeuge verfügen. In diesem Falle kann die Antriebsvorrichtung 1-i den erkannten Arbeitsbedarf direkt oder indirekt an eine andere Antriebsvorrichtung 1 melden, welche entweder selbst über die notwendigen Werkzeuge verfügt oder ein geeignetes angekoppeltes Werkzeugmodul 13 besitzt. Während Stillstandzeiten werden die Antriebsvorrichtungen 1, die Fahrkabinen 4-i sowie die Werkzeugmodule 13 vorzugsweise an Ladesäulen aufgeladen, sodass sie im Bedarfsfall sofort aktiv werden können. Das erfindungsgemäße Verkehrsmittelwechselsystem 37 bewirkt eine Maximierung der Arbeitsauslastung der verfügbaren Arbeitsvorrichtungen 1-i sowie der zur Verfügung stehenden Kabinen 4 und der Werkzeugmodule 13. Das erfindungsgemäße Verkehrsmittelwechselsystem 37 ist demzufolge sehr effizient und minimiert die Emissionsbelastung in dem betreffenden Gebiet. Eine hohe Auslastung der angekoppelten Module minimiert zudem die Anzahl der in dem Gebiet vorzuhaltenden Module, sodass die Verkehrsdichte innerhalb des Straßennetzes des Gebietes mithilfe des erfindungsgemäßen Verkehrsmittelwechselsystems 37 ebenfalls minimiert wird. Gleichzeitig können die Antriebsvorrichtungen 1-i sowie deren Werkzeugmodule 13 eine Vielzahl unterschiedlicher sinnvoller Arbeitstätigkeiten in dem Gebiet vornehmen, beispielsweise die Pflege von Grünanlagen oder Straßeninstandsetzungsarbeiten.

Das erfindungsgemäße System eignet sich vor allem auch für besondere geschlossene Gebiete, insbesondere für entsprechend ausgestattete innerstädtische Bereiche, einen Universitätscampus, ein Messe- oder Ausstellungsgelände, einen Flughafen, einen Wild- oder Tierpark, einen Windpark oder einen Naturschutzpark.

Das erfindungsgemäße System ist skalierbar und kann auf grö-ßere Bereiche ausgedehnt werden. Beispielsweise kann das erfindungsgemäße System ausgehend von einem innerstädtischen Kernbereich auf den gesamten Stadtbereich und davon ausgehend auf einen städtischen Großraum, Region usw. ausgeweitet werden.

### Bezugszeichenliste

- 1: Antriebsvorrichtung
- 2: Antriebsstrang
- 3: Schnittstelle
- 3': Gegenschnittstelle
- 4: Personen- und/oder Frachtkabine
- 5: Arbeitseinrichtung
- 6: Sensoreinheit
- 7: Kopf
- 8: Schwenkarm
- 9: Front
- 10: Schwenklager
- 11: Unterbau
- 12: Greifarm
- 13: Werkzeugmodul
- 14: Sensoren
- 15: Straßenreinigungs- und/oder Straßeninstandhaltungsmodul
- 16: Müllsammelmodul
- 17: Grünschnittmodul
- 18: Mensch-Maschine-Schnittstelle
- 19: Aktuator
- 20: Greifarm
- 21: Container
- 22: Aktuator
- 23: Reinigungseinrichtung
- 24: Gelenk
- 25: Transportfahrzeug
- 26: Arbeitsroboter
- 27: oberer Bereich der Kabine
- 28: Stützen
- 29: Ausnehmung
- 30: Räder
- 31: Steuerung der Antriebsvorrichtung 1
- 32: Zusatzmotor
- 33: Räder
- 34: Batterie
- 35: zentrale Steuerung
- 36: Datenbank
- 37: Verkehrsmittelwechselsystem

## Patentansprüche

1. Antriebsvorrichtung (1) für ein Verkehrsmittelwechselsystem, mit:
einem Antriebsstrang (2), der für den Straßeneinsatz ausgelegt ist;
einer Schnittstelle (3), die zur steifen Kopplung mit einer Personen- und/oder Frachtkabine (4) ausgelegt ist; und mit
einer Arbeitseinrichtung (5), die zur Verrichtung von Arbeitstätigkeiten, insbesondere von verkehrsunabhängigen, Pflege-, Aufräum-, Instandhaltungs- und/oder Überwachungstätigkeiten ausgelegt ist,
wobei die Antriebsvorrichtung (1) einen ersten Betriebszustand aufweist, in dem sie mit mindestens einer Personen- und/oder Frachtkabine (4) steif gekoppelt und zur autonomen Personen- und/oder Frachtbeförderung konfiguriert ist, und wobei die Antriebsvorrichtung (1) einen zweiten Betriebszustand aufweist, in dem sie von einer Personen- und/oder Frachtkabine (4) entkoppelt und zur autonomen mobilen Verrichtung der Arbeitstätigkeiten durch die Arbeitseinrichtung (5) oder durch ein angekoppeltes Werkzeugmodul (13) konfiguriert ist.

2. Antriebsvorrichtung nach Anspruch 1,
**dadurch gekennzeichnet,**
**dass** die Antriebsvorrichtung (1) eine Sensoreinheit (6) aufweist, welche in dem zweiten Betriebszustand einen höchsten Punkt der Antriebsvorrichtung (1) bildet.

3. Antriebsvorrichtung nach Anspruch 2,
**dadurch gekennzeichnet,**
**dass** die Sensoreinheit (6) positionsverlagerbar ausgebildet ist, wobei die Sensoreinheit (6) in dem ersten Betriebszustand in einer aerodynamisch günstigen Position in eine Fahrzeughülle der Antriebsvorrichtung (1) und/oder der Personen- und/oder Frachtkabine (4) integrierbar ist und in dem zweiten Betriebszustand nach oben verlagerbar ist, so dass die Sensoreinheit (6) der Antriebsvorrichtung (1) erhaben nach oben vorsteht und einen Kopf (7) der Antriebsvorrichtung (1) bildet.

4. Antriebsvorrichtung nach Anspruch 3,
**dadurch gekennzeichnet,**
**dass** die Arbeitseinrichtung (5) einen Schwenkarm (8) zur Verlagerung der Sensoreinheit (6) aufweist, der über ein im Bereich einer Frontseite (9) der Antriebsvorrichtung (1) positioniertes Schwenklager (10) mit einem den Antriebsstrang (2) enthaltenden Unterbau (11) gekoppelt ist.

5. Antriebsvorrichtung nach Anspruch 2,
**dadurch gekennzeichnet,**
**dass** die Sensoreinheit (6) positionsfest ausgebildet ist, wobei die Sensoreinheit (6) an einer Frontseite (9) der Antriebsvorrichtung (1) einen Kopf (7) bildet, der in dem zweiten Betriebszustand nach oben erhaben vorsteht.

6. Antriebsvorrichtung nach einem der Ansprüche 2 bis 5, **dadurch gekennzeichnet,**
**dass** im Bereich der Sensoreinheit (6) eine Mensch-Maschine-Schnittstelle (18) vorgesehen ist, die zur audio-visuellen Kommunikation mit einer Person in der Umgebung der Antriebsvorrichtung (1) ausgelegt ist.

7. Antriebsvorrichtung nach einem der vorangehenden Ansprüche,
**dadurch gekennzeichnet,**
**dass** die Arbeitseinrichtung (5) der Antriebsvorrichtung (1) mechanische Arbeitswerkzeuge (12), insbesondere zumindest einen Greifarm, und/oder aufgesetzte Werkzeugmodule aufweist, welche zur Verrichtung von Arbeitstätigkeiten, insbesondere von Pflege-, Aufräum- und/oder Instandhaltungsarbeiten ausgelegt sind.

8. Antriebsvorrichtung nach einem der vorangehenden Ansprüche,
**dadurch gekennzeichnet,**
**dass** die Schnittstelle (3) der Antriebsvorrichtung (1) zur Kopplung mit einem anhängbaren Werkzeugmodul (13) ausgelegt ist, welches in dem zweiten Betriebszustand mit der Antriebsvorrichtung (1) mechanisch und elektrisch koppelbar ist.

9. Antriebsvorrichtung nach einem der vorangehenden Ansprüche,
**dadurch gekennzeichnet,**
**dass** die Arbeitseinrichtung (5) der Antriebsvorrichtung (1) und/oder das Werkzeugmodul (13) ausgelegt ist zur:
a) Straßenreinigung und/oder -instandhaltung, wobei das Werkzeugmodul (13) ein Straßenreinigungs- und/oder Straßeninstandhaltungsmodul (15) bildet, das mit der Schnittstelle (3) der Antriebsvorrichtung (1) koppelbar und durch eine Steuerung (31) der Antriebsvorrichtung (1) steuerbar ist; und/oder
b) Müllsammlung und/oder Entleerung von öffentlichen Mülleimern, wobei das Werkzeugmodul (13) ein Müllsammelmodul (16) bildet, das mit der Schnittstelle (3) der Antriebsvorrichtung (1) koppelbar und durch eine Steuerung (31) der Antriebsvorrichtung (1) steuerbar ist; und/oder
c) Grünpflege, wobei das Werkzeugmodul (13) ein Grünpflegemodul (17) bildet, das mit der mechanischen Schnittstelle (3) der Antriebsvorrichtung (1) koppelbar und durch eine Steuerung (31) der Antriebsvorrichtung (1) steuerbar ist; und/oder
d) Sicherheitsüberwachung, wobei die Sensoreinheit (6) der Antriebsvorrichtung (1) oder das Werkzeugmodul (13) zur Sicherheitsüberwachung der Umgebung der Antriebsvorrichtung (1) ausgelegte Sensoren (14) aufweist.

10. Antriebsvorrichtung nach einem der vorangehenden Ansprüche 1 bis 9, wobei die Antriebsvorrichtung (1) eine Steuerung (31) aufweist, welche die Bewegung der Antriebsvorrichtung (1) durch Ansteuerung ihres Antriebsstranges (2) und/oder eines Antriebsstranges einer angekoppelten Personen- und/oder Frachtkabine (4) oder angekoppelten Werkzeugmoduls (13) auf Grundlage von Sensordaten der Umgebung die Antriebsvorrichtung (1) autonom steuert.

11. Antriebsvorrichtung nach Anspruch 10, wobei eine Steuerung (31) der Antriebsvorrichtung (1) die Arbeitseinrichtung (5) der Antriebsvorrichtung (1) und/oder ein angekoppeltes Werkzeugmodul (13) in den zweiten Betriebszustand auf Grundlage von Sensordaten der Umgebung der Antriebsvorrichtung (1) autonom steuert.

12. Antriebsvorrichtung nach Anspruch 10 oder 11, wobei die Steuerung (31) der Antriebsvorrichtung (1) ein künstliches Intelligenzmodul, insbesondere ein trainiertes neuronales Netzwerk aufweist, das empfangene Sensordaten der Umgebung der Antriebsvorrichtung (1) zur Ansteuerung des Antriebsstranges (2) der Antriebsvorrichtung (1) und/oder der Arbeitseinrichtung (5) und/oder eines angekoppelten Werkzeugmoduls (13) auswertet.

13. Verwendung einer autonomen Antriebsvorrichtung (1) eines Verkehrsmittelwechselsystems (37) nach Anspruch 1 zur autonomen Verrichtung von Arbeitstätigkeiten, insbesondere von Pflege-, Aufräum-, Instandhaltungs- und/oder Überwachungsarbeiten oder zur autonomen Verrichtung von Beförderungstätigkeiten, insbesondere von Personen- und/oder Frachtbeförderungstätigkeiten.

14. Verkehrsmittelwechselsystem (37) mit einer Vielzahl von Antriebsvorrichtungen (1) nach einem der Ansprüche 1 bis 12, die zur autonomen Personen- und/oder Frachtbeförderung oder zur autonomen Arbeitsverrichtung konfigurierbar sind, wobei eine zentrale Steuerung (35) des Verkehrsmittelwechselsystems (37) die in einem Gebiet verteilten Antriebsvorrichtungen (1) in Abhängigkeit eines in dem Gebiet bestehenden Beförderungsbedarfs und/oder bestehenden Arbeitsbedarfs konfiguriert.

15. Verkehrsmittelwechselsystem nach Anspruch 14, wobei der in dem Gebiet bestehende Beförderungsbedarf und/oder bestehende Arbeitsbedarf sensorisch ermittelt und/oder anhand von Datenmodellen berechnet wird.

## Claims

1. Drive device (1) for a system for changing means of transportation, having:
a drive train (2) that is designed for road use;
an interface (3) that is configured so as to rigidly couple to a passenger and/or cargo cabin (4); and having a work device (5), which is designed so as to execute work activities, in particular traffic-independent, care, cleaning up, maintenance and/or monitoring activities,
wherein the drive device (1) comprises a first operating state, in which the drive device is rigidly coupled to at least one passenger and/or cargo cabin (4) and is configured for autonomous passenger and/or cargo transport, and wherein the drive device (1) comprises a second operating state, in which it is decoupled from a passenger and/or cargo cabin (4) and is configured for the autonomous mobile execution of the work activities by means of the work device (5) or by means of a coupled tool module (13).

2. Drive device according to claim 1, **characterised in that** the drive device (1) comprises a sensor unit (6), which forms a highest point of the drive device (1) in the second operating state.

3. Drive device according to claim 2, **characterised in that** the sensor unit (6) is configured so as to be positionally displaceable, wherein the sensor unit (6) can be integrated into a vehicle shell of the drive device (1) and/or the passenger and/or cargo cabin (4) in an aerodynamically favourable position in the first operating state and can be displaced upward in the second operating state, so that the sensor unit (6) of the drive device (1) protrudes upward in a raised manner and forms a head (7) of the drive device (1) .

4. Drive device according to claim 3, **characterised in that** the work device (5) comprises a pivot arm (8) for displacing the sensor unit (6) and the pivot arm is coupled to a substructure (11), which contains the drive train (2), via a pivot bearing (10) that is positioned in the region of a front side (9) of the drive device (1).

5. Drive device according to claim 2, **characterised in that** the sensor unit (6) is configured so as to be positionally fixed, wherein the sensor unit (6) forms a head (7) on a front side (9) of the drive device (1) and the head protrudes upward in a raised manner in the second operating state.

6. Drive device according to one of claims 2 to 5, **characterised in that**
a human-machine interface (18) is provided in the region of the sensor unit (6) and is designed for audio-visual communication with a person in the vicinity of the drive device (1).

7. Drive device according to one of the preceding claims, **characterised in that**
the work device (5) of the drive device (1) comprises mechanical work tools (12), in particular at least one gripping arm, and/or attached tool modules, which are designed so as to execute work activities, in particular care, cleaning up and/or maintenance work.

8. Drive device according to one of the preceding claims, **characterised in that**
the interface (3) of the drive device (1) is designed to be coupled to an attachable tool module (13), which can be mechanically and electrically coupled to the drive device (1) in the second operating state.

9. Drive device according to one of the preceding claims, **characterised in that**
the work device (5) of the drive device (1) and/or the tool module (13) is designed for:
a) road cleaning and/or maintenance, wherein the tool module (13) forms a road cleaning and/or road maintenance module (15), which can be coupled to the interface (3) of the drive device (1) and can be controlled by means of a controller (31) of the drive device (1); and/or
b) waste collection and/or emptying of public bins, wherein the tool module (13) forms a waste collection module (16), which can be coupled to the interface (3) of the drive device (1) and can be controlled by means of a controller (31) of the drive device (1); and/or
c) green space maintenance, wherein the tool module (13) forms a green space maintenance module (17), which can be coupled to the mechanical interface (3) of the drive device (1) and can be controlled by means of a controller (31) of the drive device (1); and/or
d) safety monitoring, wherein the sensor unit (6) of the drive device (1) or the tool module (13) comprises sensors (14) that are designed for monitoring the safety of the environment of the drive device (1).

10. Drive device according to one of the preceding claims 1 to 9, wherein the drive device (1) comprises a controller (31), which autonomously controls the movement of the drive device (1) by means of controlling its drive train (2) and/or a drive train of a coupled passenger and/or cargo cabin (4) or coupled tool module (13) on the basis of sensor data regarding the environment.

11. Drive device according to claim 10, wherein a controller (31) of the drive device (1) autonomously controls the work device (5) of the drive device (1) and/or a coupled tool module (13) in the second operating state based on sensor data regarding the environment of the drive device (1).

12. Drive device according to claim 10 or 11, wherein the controller (31) of the drive device (1) comprises an artificial intelligence module, in particular a trained neural network, which evaluates received sensor data regarding the environment of the drive device (1) for the control of the drive train (2) of the drive device (1) and/or the work device (5) and/or a coupled tool module (13) .

13. Use of an autonomous drive device (1) of a system for changing means of transportation (37) according to claim 1 for the autonomous execution of work activities, in particular care, cleaning up, maintenance and/or monitoring work, or for the autonomous execution of transport activities, in particular passenger and/or cargo transport activities.

14. System for changing means of transportation (37) having a plurality of drive devices (1) according to one of claims 1 to 12, which can be configured for autonomous passenger and/or cargo transport or for the autonomous execution of work, wherein a central controller (35) of the system for changing means of transportation (37) configures the drive devices (1), which are distributed in an area, in dependence upon an existing transport demand and/or existing work demand in the area.

15. System for changing means of transportation according to claim 14, wherein the existing transport demand and/or existing work demand in the area is determined using sensors and/or calculated with the aid of data models.

## Revendications

1. Dispositif d'entraînement (1) pour un système de changement de moyen de transport, comprenant :
un groupe motopropulseur (2) qui est conçu pour l'utilisation sur route ;
une interface (3) qui est conçue pour être rigidement accouplée à une cabine de passagers et/ou de fret (4) ; et comprenant
un dispositif de travail (5) qui est conçu pour exécuter des activités de travail, en particulier des activités de maintenance, de nettoyage, d'entretien et/ou de surveillance indépendantes de la circulation,
dans lequel le dispositif d'entraînement (1) présente un premier état de fonctionnement dans lequel il est rigidement accouplé à au moins une cabine de passagers et/ou de fret (4) et est configuré pour le transport autonome de passagers et/ou de fret, et
dans lequel le dispositif d'entraînement (1) présente un second état de fonctionnement dans lequel il est désaccouplé d'une cabine de passagers et/ou de fret (4) et est configuré pour l'exécution mobile autonome des activités de travail par le dispositif de travail (5) ou par un module d'outil (13) accouplé.

2. Dispositif d'entraînement selon la revendication 1,
**caractérisé en ce que**
le dispositif d'entraînement (1) comprend une unité de capteur (6) qui forme un point le plus haut du dispositif d'entraînement (1) dans le second état de fonctionnement.

3. Dispositif d'entraînement selon la revendication 2,
**caractérisé en ce que**
l'unité de capteur (6) est réalisée de manière à pouvoir changer de position, dans lequel l'unité de capteur (6) peut, dans le premier état de fonctionnement, être intégrée dans une position aérodynamiquement favorable dans une coque de véhicule du dispositif d'entraînement (1) et/ou de la cabine de passagers et/ou de fret (4) et peut, dans le second état de fonctionnement, être déplacée vers le haut, de sorte que l'unité de capteur (6) du dispositif d'entraînement (1) fait saillie vers le haut de manière surélevée et forme une tête (7) du dispositif d'entraînement (1).

4. Dispositif d'entraînement selon la revendication 3,
**caractérisé en ce que**
le dispositif de travail (5) comprend un bras pivotant (8) pour le déplacement de l'unité de capteur (6), qui est accouplé à une sous-structure (11) contenant le groupe motopropulseur (2), par l'intermédiaire d'un palier de pivotement (10) positionné dans la zone d'un côté avant (9) du dispositif d'entraînement (1).

5. Dispositif d'entraînement selon la revendication 2,
**caractérisé en ce que**
l'unité de capteur (6) est réalisée pour être fixe en position, dans lequel l'unité de capteur (6) forme une tête (7) sur un côté avant (9) du dispositif d'entraînement (1), qui fait saillie vers le haut de manière surélevée dans le second état de fonctionnement.

6. Dispositif d'entraînement selon l'une des revendications 2 à 5,
**caractérisé en ce que**
dans la zone de l'unité de capteur (6) est prévue une interface homme-machine (18) pour la communication audiovisuelle avec une personne se trouvant à proximité du dispositif d'entraînement (1).

7. Dispositif d'entraînement selon l'une des revendications précédentes,
**caractérisé en ce que**
le dispositif de travail (5) du dispositif d'entraînement (1) comprend des outils de travail mécaniques (12), en particulier au moins un bras de préhension, et/ou des modules d'outils montés, qui sont conçus pour exécuter des activités de travail, en particulier des travaux de maintenance, de nettoyage et/ou d'entretien.

8. Dispositif d'entraînement selon l'une des revendications précédentes,
**caractérisé en ce que**
l'interface (3) du dispositif d'entraînement (1) est conçue pour être accouplée à un module d'outil pouvant être accroché (13), qui peut être mécaniquement et électriquement accouplé au dispositif d'entraînement (1) dans le second état de fonctionnement.

9. Dispositif d'entraînement selon l'une des revendications précédentes,
**caractérisé en ce que**
le dispositif de travail (5) du dispositif d'entraînement (1) et/ou le module d'outil (13) est conçu pour :
a) le nettoyage et/ou l'entretien de route, dans lequel le module d'outil (13) forme un module de nettoyage de route et/ou d'entretien de route (15) qui peut être accouplé à l'interface (3) du dispositif d'entraînement (1) et peut être commandé par une commande (31) du dispositif d'entraînement (1) ; et/ou
b) la collecte de déchets et/ou le vidage de poubelles publiques, dans lequel le module d'outil (13) forme un module de collecte de déchets (16) qui peut être accouplé à l'interface (3) du dispositif d'entraînement (1) et peut être commandé par une commande (31) du dispositif d'entraînement (1) ; et/ou
c) l'entretien de la végétation, dans lequel le module d'outil (13) forme un module d'entretien de la végétation (17) qui peut être accouplé à l'interface mécanique (3) du dispositif d'entraînement (1) et peut être commandé par une commande (31) du dispositif d'entraînement (1) ; et/ou
d) la surveillance de la sécurité, dans lequel l'unité de capteur (6) du dispositif d'entraînement (1) ou le module d'outil (13) comprend des capteurs (14) conçus pour la surveillance de la sécurité de l'environnement du dispositif d'entraînement (1).

10. Dispositif d'entraînement selon l'une des revendications 1 à 9 précédentes, dans lequel le dispositif d'entraînement (1) comprend une commande (31) qui commande de manière autonome le mouvement du dispositif d'entraînement (1) en commandant son groupe motopropulseur (2) et/ou un groupe motopropulseur d'une cabine de passagers et/ou de fret (4) accouplée ou un module d'outil (13) accouplé sur la base de données de capteur de l'environnement du dispositif d'entraînement (1).

11. Dispositif d'entraînement selon la revendication 10, dans lequel une commande (31) du dispositif d'entraînement (1) commande de manière autonome le dispositif de travail (5) du dispositif d'entraînement (1) et/ou un module d'outil accouplé (13) dans le second état de fonctionnement, sur la base de données de capteur de l'environnement du dispositif d'entraînement (1).

12. Dispositif d'entraînement selon la revendication 10 ou 11, dans lequel la commande (31) du dispositif d'entraînement
(1) comprend un module d'intelligence artificielle, en particulier un réseau neuronal entraîné, qui évalue les données de capteur reçues de l'environnement du dispositif d'entraînement (1) pour commander le groupe motopropulseur
(2) du dispositif d'entraînement (1) et/ou du dispositif de travail (5) et/ou d'un module d'outil (13) accouplé.

13. Utilisation d'un dispositif d'entraînement autonome (1) d'un système de changement de moyen de transport (37) selon la revendication 1 pour l'exécution autonome d'activités de travail, en particulier des travaux de maintenance, de nettoyage, d'entretien et/ou de surveillance ou pour l'exécution autonome d'activités de transport, en particulier d'activités de transport de passagers et/ou de fret.

14. Système de changement de moyen de transport (37) comprenant une pluralité de dispositifs d'entraînement (1) selon l'une des revendications 1 à 12 qui peuvent être configurés pour le transport autonome de passagers et/ou de fret ou pour le dispositif de transport autonome, dans lequel une commande centrale (35) du système de changement de moyen de transport (37) configure les dispositifs d'entraînement (1) répartis dans une zone en fonction d'un besoin de transport existant dans la zone et/ou d'un besoin de travail existant.

15. Système de changement de moyen de transport selon la revendication 14, dans lequel le besoin de transport existant dans la zone et/ou le besoin de travail existant est déterminé par des capteurs et/ou est calculé sur la base de modèles de données.
